# EUROPEAN PATENT APPLICATION

(11) **EP 4 366 404 A1**
(43) Date of publication of application: **08.05.2024**
(21) Application number: 22832062.8
(22) Date of filing: 28.06.2022
(51) Int. Cl.: H04W 64/00

(54) **SPATIAL RELATIONSHIP INDICATING METHOD AND DEVICE**

(30) Priority: 30.06.2021 CN 202110736502
(71) Applicant: Vivo Mobile Communication Co., Ltd., Dongguan, Guangdong 523863 (CN)
(72) Inventor: WANG, Yuanyuan, Dongguan, Guangdong 523863 (CN); ZHUANG, Zixun, Dongguan, Guangdong 523863 (CN); SI, Ye, Dongguan, Guangdong 523863 (CN); WU, Huaming, Dongguan, Guangdong 523863 (CN)
(74) Representative: Lavoix
(86) International application number: PCT/CN2022/102004
(87) International publication number: WO 2023/274249

(57) **Abstract**

Embodiments of this application pertain to the field of communications technologies, and disclose a spatial relation indication method and a device. The spatial relation indication method in the embodiments of this application includes: receiving, by a terminal, first information, where the first information is used for at least one of the following: configuring one or more spatial relations for a positioning reference signal; and activating one or more spatial relations for a positioning reference signal.

## Description

### CROSS-REFERENCE TO RELATED APPLICATIONS

The present invention claims priority to Chinese Patent Application No. 202110736502.0, filed with the China National Intellectual Property Administration on June 30, 2021, and entitled "SPATIAL RELATION INDICATION METHOD AND DEVICE", which is incorporated herein by reference in its entirety.

### TECHNICAL FIELD

This application pertains to the field of communications technologies, and specifically relates to a spatial relation indication method and a device.

### BACKGROUND

In the related art, positioning reference signals usually do not support dynamic configuration based on positioning requirements and changes. When there are few people or there is no positioning demand late at night, a positioning reference signal may still be sent. When there is an urgent or low-latency demand, a positioning reference signal cannot be sent in time, and measurement and calculation cannot be performed until a specific sending period. Consequently, waste of positioning resources is caused, or positioning measurement results cannot be reported in time.

Therefore, introduction of new positioning reference signals is being discussed in the related art to resolve the foregoing problems. For example, an on-demand (on demand) positioning reference signal is introduced. However, in a case that a new positioning reference signal is introduced, there is an unresolved technical problem of how to transmit the positioning reference signal, for example, whether to switch all positioning reference signals or a reference signal with a specific spatial relation, or for another example, how to configure a spatial relation to implement transmission of a positioning reference signal that meets a demand.

### SUMMARY

Embodiments of this application provide a spatial relation indication method and a device, to resolve a problem of how to implement transmission of a positioning reference signal.

According to a first aspect, a spatial relation indication method is provided and includes: receiving, by a terminal, first information, where the first information is used for at least one of the following: configuring one or more spatial relations for a positioning reference signal; and activating one or more spatial relations for a positioning reference signal.

According to a second aspect, a spatial relation indication method is provided and includes: sending, by a network-side device, first information, where the first information is used for at least one of the following: configuring one or more spatial relations for a positioning reference signal; and activating one or more spatial relations for a positioning reference signal.

According to a third aspect, a spatial relation indication apparatus is provided and includes a first communications module, configured to receive first information, where the first information is used for at least one of the following: configuring one or more spatial relations for a positioning reference signal; and activating one or more spatial relations for a positioning reference signal.

According to a fourth aspect, a spatial relation indication apparatus is provided and includes a second communications module, configured to send first information, where the first information is used for at least one of the following: configuring one or more spatial relations for a positioning reference signal; and activating one or more spatial relations for a positioning reference signal.

According to a fifth aspect, a terminal is provided. The terminal includes a processor, a memory, and a program or instructions stored in the memory and capable of running on the processor. When the program or instructions are executed by the processor, the method according to the first aspect is implemented.

According to a sixth aspect, a terminal is provided and includes a processor and a communications interface. The communications interface is configured to receive first information, where the first information is used for at least one of the following: configuring one or more spatial relations for a positioning reference signal; and activating one or more spatial relations for a positioning reference signal.

According to a seventh aspect, a network-side device is provided. The network-side device includes a processor, a memory, and a program or instructions stored in the memory and capable of running on the processor. When the program or instructions are executed by the processor, the method according to the second aspect is implemented.

According to an eighth aspect, a network-side device is provided and includes a processor and a communications interface. The communications interface is configured to send first information, where the first information is used for at least one of the following: configuring one or more spatial relations for a positioning reference signal; and activating one or more spatial relations for a positioning reference signal.

According to a ninth aspect, a readable storage medium is provided. The readable storage medium stores a program or instructions. When the program or instructions are executed by a processor, the method according to the first aspect is implemented, or the method according to the second aspect is implemented.

According to a tenth aspect, a chip is provided. The chip includes a processor and a communications interface. The communications interface is coupled to the processor. The processor is configured to run a program or instructions to implement the method according to the first aspect or implement the method according to the second aspect.

According to an eleventh aspect, a computer program or program product is provided. The computer program or program product is stored in a non-transitory storage medium. The program or program product is executed by at least one processor to implement the method according to the first aspect or implement the method according to the second aspect.

In the embodiments of this application, the terminal receives the first information, where the first information may configure and/or activate one or more spatial relations for the positioning reference signal. This helps implement transmission of the positioning reference signal, and helps avoid waste of positioning resources or inability to report a positioning measurement result in time, so that utilization of positioning resources is improved, or helps report a positioning measurement result in time.

### BRIEF DESCRIPTION OF DRAWINGS

FIG. 1 is a schematic diagram of a wireless communications system according to an embodiment of this application;
FIG. 2 is a schematic flowchart of a spatial relation indication method according to an embodiment of this application;
FIG. 3 is a schematic diagram of a spatial range of a plurality of spatial relations according to an embodiment of this application;
FIG. 4 is a schematic flowchart of a spatial relation indication method according to an embodiment of this application;
FIG. 5 is a schematic flowchart of a spatial relation indication method according to an embodiment of this application;
FIG. 6 is a schematic diagram of a structure of a spatial relation indication apparatus according to an embodiment of this application;
FIG. 7 is a schematic diagram of a structure of a spatial relation indication apparatus according to an embodiment of this application;
FIG. 8 is a schematic diagram of a structure of a communications device according to an embodiment of this application;
FIG. 9 is a schematic diagram of a structure of a terminal according to an embodiment of this application; and
FIG. 10 is a schematic diagram of a structure of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. In the following descriptions, a new radio (New Radio, NR) system is described for an illustrative purpose, and NR terms are used in most of the following descriptions. However, these technologies may also be applied to other applications than an NR system application, for example, a 6th Generation (6th Generation, 6G) communications system.

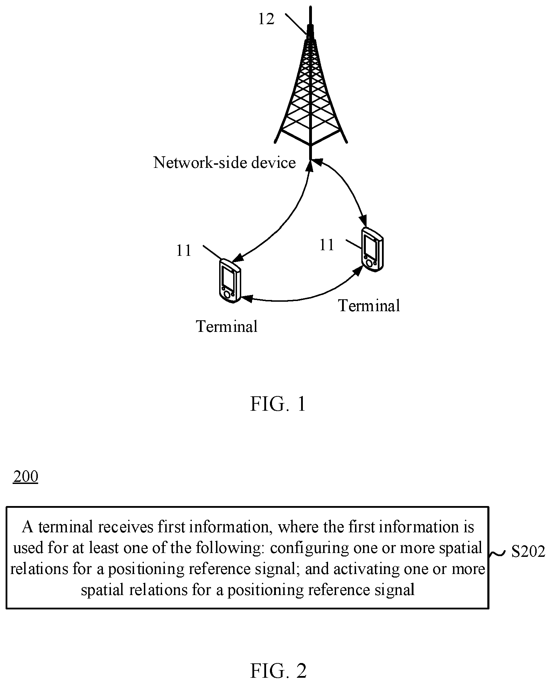

FIG. 1 is a schematic diagram of a wireless communications system to which an embodiment of this application may be applied. The wireless communications system includes a terminal 11 and a network-side device 12. The terminal 11 may also be referred to as a terminal device or a user equipment (User Equipment, UE). The terminal 11 may be a terminal-side device such as a mobile phone, a tablet computer (Tablet Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), a vehicular user equipment (VUE), or a pedestrian user equipment (PUE). The wearable device includes a smart watch, a smart band, an earphone, glasses, or the like. It should be noted that a specific type of the terminal 11 is not limited in the embodiments of this application. The network-side device 12 may be a base station or a core network device. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a next generation NodeB (gNB), a home NodeB, a home evolved NodeB, a WLAN access point, a Wi-Fi node, a transmission and reception point (Transmission and Reception Point, TRP), or another appropriate term in the art. As long as the same technical effect is achieved, the base station is not limited to specific technical terms. The core network device may be a location server, a location management function (Location Management Function, LMF), an evolved serving mobile location center (Evolved Serving Mobile Location Center, E-SMLC), or another appropriate term in the art. It should be noted that in the embodiments of this application, only a base station or a core network device in an NR system is used as an example, but a specific type of the base station or the core network device is not limited.

A spatial relation indication method and a device provided in the embodiments of this application are hereinafter described in detail by using some embodiments and application scenarios thereof with reference to the accompanying drawings.

As shown in FIG. 2, an embodiment of this application provides a spatial relation indication method 200. The method may be performed by a terminal. In other words, the method may be performed by software or hardware installed in the terminal. The method includes the following step.

S202. A terminal receives first information, where the first information is used for at least one of the following: configuring one or more spatial relations for a positioning reference signal; and activating one or more spatial relations for a positioning reference signal.

The spatial relation mentioned in each embodiment of this application may be used by the terminal to send or receive the positioning reference signal, and the spatial relation may include at least one of the following: a precoding matrix indicator (Precoding Matrix Indicator, PMI), precoding information, an antenna port and/or panel information, spatial relation reference signal information, a transmission configuration indicator (Transmission Configuration Indicator, TCI) state (state), quasi-co-location (Quasi-Co-Location, QCL) information, a path loss reference signal (Path Loss RS, PL RS), and the like.

The positioning reference signal or positioning reference signal information mentioned in each embodiment of this application may include at least one of the following: a positioning reference signal (Positioning Reference Signal, PRS), a sounding reference signal (Sounding Reference Signal, SRS), an SRS for positioning (SRS for positioning), a synchronization signal and PBCH block or synchronization signal block (Synchronization Signal and PBCH block, SSB), a channel state information-reference signal (Channel State Information-Reference Signal, CSI-RS), a sidelink-synchronization signal (Sidelink-Synchronization Signal, S-SS), a physical broadcast synchronization channel (Physical Broadcast Synchronization Channel, PBSCH) block (block), a master information block (Master Information Block, MIB), a physical downlink control channel (Physical Downlink Control Channel, PDCCH), a control resource set (Control Resource SET, CORESET), a tracking reference signal (Tracking Reference Signal, TRS), a demodulation reference signal (DeModulation Reference Signal, DMRS), and the like.

The PRS includes at least one of the following: an LTE PRS, an NR PRS, an on-demand (on demand) positioning reference signal, and the like.

In addition, the positioning reference signal mentioned in each embodiment of this application may be a positioning reference signal of a serving cell, or may be a positioning reference signal of a non-serving cell or a neighboring cell.

In this embodiment, the first information may configure one or more spatial relations for the positioning reference signal; or the first information activates one or more spatial relations for the positioning reference signal; or an initial state of one or more spatial relations configured by the first information for the positioning reference signal is an activated state, that is, the first information configures and also activates one or more spatial relations for the positioning reference signal.

Optionally, after S202, the method may further include the following step: The terminal receives or sends the positioning reference signal by using one or more spatial relations configured and/or activated by the first information.

In an example, that the terminal receives or sends the positioning reference signal by using one spatial relation includes one of the following:
(1) The terminal receives or sends the positioning reference signal in a plurality of periods, repetitions, or resources by using one spatial relation.
(2) The terminal receives or sends the positioning reference signal in a plurality of periods, repetitions, resources, frequency division multiplexing, or time division multiplexing sequentially by using one spatial relation. The spatial relations used by the terminal in the plurality of periods, repetitions, resources, frequency division multiplexing, or time division multiplexing may be different.

For example, the terminal receives or sends the positioning reference signal in the plurality of periods, repetitions, or resources by using different spatial relations; or the terminal receives or sends the positioning reference signal on a plurality of time domain resources or frequency domain resources by using different spatial relations.

In another example, that the terminal receives or sends the positioning reference signal by using a plurality of spatial relations includes one of the following:
(1) The terminal receives or sends the positioning reference signal in a plurality of periods, repetitions, or resources sequentially by using different spatial relations in a spatial relation list. The spatial relation list may be configured and/or activated by the first information, and the spatial relation list includes one or more spatial relations or one or more reference signals.
(2) The terminal receives or sends the positioning reference signal in a plurality of periods, repetitions, or resources sequentially by using different spatial relations in the plurality of spatial relations.
(3) The terminal receives or sends the positioning reference signal in a plurality of periods, repetitions, or resources sequentially by using activated different spatial relations in a spatial relation list.
(4) The terminal receives or sends the positioning reference signal in a plurality of periods, repetitions, or resources sequentially by using activated different spatial relations in the plurality of spatial relations.

In this embodiment of this application, the terminal receives the first information, where the first information may configure and/or activate one or more spatial relations for the positioning reference signal. This helps implement transmission of the positioning reference signal, and helps avoid waste of positioning resources or inability to report a positioning measurement result in time, so that utilization of positioning resources is improved, or helps report a positioning measurement result in time.

Based on the embodiment shown in FIG. 2, optionally, in a case that the first information is used for configuring one or more spatial relations for a positioning reference signal, the first information may include at least one of the following:
(1) a spatial relation list, where the spatial relation list includes one or more spatial relations or one or more reference signals; and
(2) one or more spatial relations.

A mapping relationship between the positioning reference signal and the spatial relation list may include one of the following:
(1) one positioning reference signal corresponds to one spatial relation list;
(2) one positioning reference signal corresponds to a plurality of spatial relation lists;
(3) a plurality of positioning reference signals correspond to one spatial relation list; and
(4) a plurality of positioning reference signals correspond to a plurality of spatial relation lists.

In a case that the first information is used for configuring one or more spatial relations for a positioning reference signal, the first information may include at least one of the following:
(1) a PMI list, where the PMI list includes one or more PMIs;
(2) a precoding information list, where the precoding information list includes one or more pieces of precoding information;
(3) one or more PMIs;
(4) one or more pieces of precoding information; and
(5) a plurality of first mapping relationships, where the first mapping relationships include mapping relationships between positioning reference signals and antenna ports.

Optionally, the foregoing (1) to (5) may be explicitly indicated by the first information.

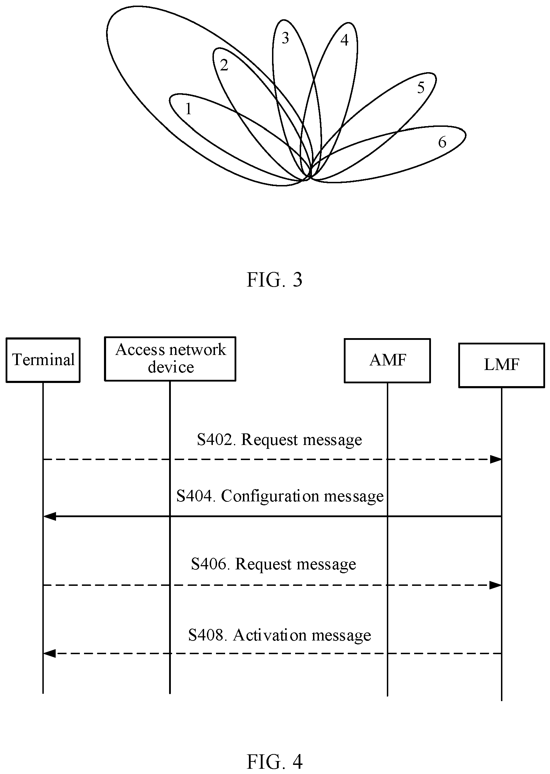

Based on the embodiment shown in FIG. 2, optionally, in a case that the first information is used for configuring one or more spatial relations for a positioning reference signal, the first information is further used for indicating at least one of the following:
(1) A plurality of positioning reference signals have a same spatial relation. For example, the plurality of positioning reference signals may be sent or received by using a same beam.
(2) A plurality of positioning reference signals have a same first spatial relation but different second spatial relations. As shown in FIG. 3, for the second spatial relations, refer to beam 1 to beam 6 in FIG. 3, and for the first spatial relation, refer to a beam (coarse beam) including beam 1 and beam 2 in FIG. 3.

In this example, the plurality of positioning reference signals may have the same coarse beam but different fine beams, where a spatial range of a beam may be represented by a beam granularity or a beam width.

For example, positioning reference signals 1 and 2 are sent or received by using beam 1 (fine beam), and positioning reference signals 3 and 4 are sent or received by using beam 2 (fine beam); or positioning reference signals 1, 2, 3, and 4 may be sent or received by using one coarse beam in FIG. 3.

(3) A plurality of positioning reference signals are associated with a first reference signal, where a spatial range of the first reference signal is larger than a spatial range of the plurality of positioning reference signals. For example, a spatial range of a beam used for the first reference signal is larger than a spatial range of beams used for the plurality of positioning reference signals.

(4) A positioning reference signal is associated with a first reference signal and a second reference signal, where a spatial range of the first reference signal is larger than a spatial range of the second reference signal. For example, a spatial range of a beam used for the first reference signal is larger than a spatial range of a beam used for the second reference signal.

(5) A positioning reference signal is associated with a first reference signal and N second reference signals, where a spatial range of the first reference signal is larger than or equal to a spatial range of the N second reference signals, and N is a positive integer. For example, a spatial range of a beam used for the first reference signal is larger than or equal to a spatial range of beams used for the N second reference signals.

Optionally, the foregoing (1) to (5) may be implicitly indicated by the first information.

This embodiment can help the terminal recognize a relationship between a coarse beam and a fine beam, and directionally supplement positioning reference signal resources in related directions, thereby reducing waste of positioning reference signal resources.

For example, the first information may configure and/or activate a plurality of spatial relations for a plurality of positioning reference signals, and spatial ranges of the plurality of spatial relations are different. Specifically, as shown in FIG. 3, the terminal may first use the coarse beam shown in FIG. 3 to send or receive the positioning reference signal (only one is shown in FIG. 3, but actually, there may be more coarse beams), select the course beam based on a measurement result of the positioning reference signal (for example, select one), and then use a fine beam in the selected coarse beam to send or receive the positioning reference signal. This helps reduce waste of positioning reference signal resources.

Based on the embodiment shown in FIG. 2, optionally, in a case that the first information is used for configuring a plurality of spatial relations for a positioning reference signal, the first information is further used for indicating at least one of the following:
(1) A plurality of positioning reference signals in a positioning reference signal resource set have a same spatial relation. For example, the plurality of positioning reference signals may be sent or received by using a same beam.
(2) A plurality of positioning reference signals in a positioning reference signal resource set have a same first spatial relation but different second spatial relations. Optionally, a spatial range of the first spatial relation is larger than a spatial range of the second spatial relation.
   For example, in the example shown in FIG. 3, positioning reference signal 5 is sent or received by using beam 1 (fine beam), and positioning reference signal 6 is sent or received by using beam 2 (fine beam); or both positioning reference signals 5 and 6 may be sent or received by using a coarse beam in FIG. 3.
(3) A plurality of positioning reference signals in a positioning reference signal resource set are associated with a first reference signal, and a spatial range of the first reference signal is larger than a spatial range of the plurality of positioning reference signals.
(4) A second positioning reference signal in a second positioning reference signal resource set (set 2 for short) has an integer relation with a first positioning reference signal in a first positioning reference signal resource set (set 1 for short). For example, set 2 has 16 positioning reference signal resources (resources for short), set 1 has 8 resources, and there is a correspondence between every two resources in set 2 and one resource in set 1.
(5) A second positioning reference signal in a second positioning reference signal resource set has an integer relation with a first positioning reference signal in a first positioning reference signal resource subset.
(6) If second positioning reference signals in a second positioning reference signal resource set have a same first spatial relation with first positioning reference signals in a first positioning reference signal resource set, a quantity of the second positioning reference signals has an integer relation with a quantity of the first positioning reference signals. For example, the quantity of the second positioning reference signals is 2 times or 3 times the quantity of the first positioning reference signals.

Optionally, the foregoing (1) to (6) may be implicitly indicated by the first information.

This embodiment can help the terminal recognize a relationship between a coarse beam (which may also be expressed as a first-level beam) and a fine beam (which may also be expressed as a second-level beam), and directionally supplement positioning reference signal resources in related directions, thereby reducing waste of positioning reference signal resources.

On a basis of the foregoing (1) to (6), the first information may be used for indicating (which may be implicitly indicating) at least one of the following:
(1) one positioning reference signal has a plurality of repetitions, where the plurality of repetitions are mapped to different antenna ports and/or precoding information;
(2) the plurality of positioning reference signals in the positioning reference signal resource set are mapped to different antenna ports and/or precoding information;
(3) the positioning reference signal has a plurality of periods, where the plurality of periods are mapped to different antenna ports and/or precoding information;
(4) one positioning reference signal has a plurality of repetitions, where the plurality of repetitions are associated with different spatial relations;
(5) the plurality of positioning reference signals in the positioning reference signal resource set are associated with different spatial relations; and
(6) the positioning reference signal has a plurality of periods, where the plurality of periods are associated with different spatial relations.

Based on the embodiment shown in FIG. 2, optionally, the first information may be specifically used for at least one of the following: configuring one or more spatial relations for an on-demand (On demand) positioning reference signal; and activating one or more spatial relations for an on-demand positioning reference signal.

Optionally, the first information may be used for configuring at least one of the following for the on-demand positioning reference signal:
(1) a spatial relation list, where the spatial relation list includes one or more spatial relations;
(2) one or more spatial relations;
(3) one or more pieces of expected (Expect, or expected) angle of departure (Angle of Departure, AoD) direction information and/or width information, where an expected angle of departure may be understood as a search window in this embodiment; and
(4) one or more pieces of expected angle of arrival (Angle of Arrival, AoA) direction information and/or width information.

Optionally, the foregoing (1) to (4) may be explicitly indicated by the first information.

Optionally, the first information may be used for configuring at least one of the following for the on-demand positioning reference signal:
(1) The on-demand positioning reference signal is associated with one or more positioning reference signals.
(2) One or more on-demand positioning reference signals are associated with one positioning reference signal or associated with one on-demand positioning reference signal.
   As shown in FIG. 3, one or more on-demand positioning reference signals may be sent or received by using fine beams 1 and 2 in FIG. 3, and an associated on-demand positioning reference signal may be sent or received by using a coarse beam in FIG. 3.
(3) The on-demand positioning reference signal has an integer relation with an associated positioning reference signal. For example, an on-demand positioning reference signal resource set (set 2) has 16 resources, an associated positioning reference signal resource set (set 1) has 8 resources, and there is a correspondence between every two resources in set 2 and one resource in set 1.

Optionally, the foregoing (1) to (3) may be implicitly indicated by the first information.

Optionally, the foregoing configuration may be associated with an expected angle of arrival or an expected angle of departure. For example, one or more on-demand positioning reference signals in the on-demand positioning reference signal resource set correspond to one expected angle of arrival or expected angle of departure. In this case, in a possible embodiment, a quantity of on-demand positioning reference signals is determined based on a width of the expected angle of arrival or the expected angle of departure, so that a spatial relation corresponding to each on-demand positioning reference signal is determined. In another possible embodiment, a spatial relation corresponding to the on-demand positioning reference signals is determined based on a width of the expected angle of arrival or the expected angle of departure and/or a quantity of on-demand positioning reference signals. Simply, if a range of the expected angle of arrival is 60 degrees and a central angle is 0 degrees, in a possible embodiment, the first spatial relation is a reference signal whose central angle is 0 degrees and whose range is 60 degrees. Alternatively, the second space is M reference signals belonging to the expected angle of arrival, for example, two reference signals whose central angles are -15 degrees and +15 degrees respectively.

Optionally, the first information is used for configuring at least one of the following for the on-demand positioning reference signal:
(1) a plurality of on-demand positioning reference signals have a same spatial relation;
(2) a plurality of on-demand positioning reference signals have a same first spatial relation but different second spatial relations;
(3) a plurality of on-demand positioning reference signals are associated with a first reference signal, where a spatial range of the first reference signal is larger than a spatial range of the plurality of on-demand positioning reference signals;
(4) a plurality of on-demand positioning reference signals are associated with a positioning reference signal, where a spatial range of the positioning reference signal is larger than a spatial range of the plurality of on-demand positioning reference signals; and
(5) a plurality of on-demand positioning reference signals are associated with a first reference signal and N second reference signals, where a spatial range of the first reference signal is larger than or equal to a spatial range of the N second reference signals.

Optionally, the foregoing (1) to (5) may be implicitly indicated by the first information. For specific examples, refer to the description of the foregoing embodiment in this specification.

Based on the embodiment shown in FIG. 2, optionally, in a case that the first information is used for activating one or more spatial relations for a positioning reference signal, the receiving first information includes one of the following:
(1) receiving media access control control element (Media Access Control Control Element, MAC CE) signaling, where the MAC CE signaling is used to activate one or more spatial relations for the positioning reference signal;
(2) receiving downlink control information (Downlink Control Information, DCI), where the DCI includes indication information of one or more spatial relations of the positioning reference signal, and the DCI is used to activate one or more spatial relations for the positioning reference signal; and
(3) receiving positioning protocol signaling, where the positioning protocol signaling includes an activation command, and the activation command is used to activate one or more spatial relations for the positioning reference signal; and the positioning protocol signaling may include LTE positioning protocol (LTE Positioning Protocol, LPP) signaling, new radio positioning protocol annex (New Radio Positioning Protocol A, NRPPa) signaling, or the like.

Optionally, the first information may further include at least one of the following: a physical cell identifier (Physical Cell Identifier, PCI), identification information of a non-serving cell, and frequency information, where at least one of the following of the non-serving cell can be configured as one or more spatial relations of the positioning reference signal: a synchronization signal and PBCH block or SSB, a positioning reference signal, a sounding reference signal, and a CSI-RS.

Optionally, the activation command mentioned in the foregoing (3) is used for at least one of the following:
(a) carrying identification information of the positioning reference signal;
(b) carrying identification information of one or more spatial relations;
(c) carrying identification information of a spatial relation list;
(d) activating a spatial relation corresponding to a first subset of the positioning reference signal or a beam in a first direction;
(e) expected AoD direction information and/or width information; and
(f) expected AoA direction information and/or width information.

Optionally, the activation command includes indication information, and the indication information indicates that the positioning reference signal is to be sent or received based on specific or predefined precoding information; or the positioning protocol signaling includes precoding information, and the positioning reference signal corresponds to one or more pieces of the precoding information; or the activation command includes indication information, and the indication information indicates that the positioning reference signal is to be sent or received based on a specific or predefined antenna port and/or precoding information; or the activation command includes indication information, and the indication information indicates that the positioning reference signal is to be sent or received based on specific or predefined spatial relation information.

On a basis of the foregoing embodiment, the method further includes: the terminal sends a request message, where the request message is used to request to configure at least one of the following:
(1) priority information of spatial relations of the positioning reference signal;
(2) one or more spatial relations of the positioning reference signal; and
(3) an on-demand positioning reference signal.

In this embodiment, the terminal can directly request to configure information about the positioning reference signal. This helps resolve a problem of waste of positioning resources caused by a positioning reference signal in the related art or inability to report a positioning measurement result in time, and helps reduce waste of positioning reference signal resources.

It should be noted that the foregoing on-demand positioning reference signal is a type of positioning reference signal, and that the related description of the positioning reference signal may also be applicable to the on-demand positioning reference signal.

On a basis of the foregoing embodiment, in a case that a plurality of spatial relations are configured for the terminal, the method further includes: the terminal receives or sends the positioning reference signal by using one of the following:
(1) A spatial relation used for receiving a CORESET. For example, if a plurality of pieces of TCI state or QCL signal or spatial relation information are configured for the terminal, and the terminal does not receive activation information, the terminal receives or sends the positioning reference signal by using TCI state or QCL signal or spatial relation information used for receiving the control resource set.
(2) A default spatial relation. For example, if a plurality of pieces of TCI state or QCL signal or spatial relation information are configured for the terminal, and the terminal does not receive activation information, the terminal receives or sends the positioning reference signal by using default TCI state or QCL signal or spatial relation information.
(3) A preconfigured spatial relation. For example, if a plurality of pieces of TCI state or QCL signal or spatial relation information are configured for the terminal, and the terminal does not receive activation information, the terminal receives or sends the positioning reference signal by using TCI state or QCL signal or spatial relation information configured in R16.
(4) A first spatial relation. For example, if a plurality of pieces of TCI state or QCL signal or spatial relation information are configured for the terminal, and the terminal does not receive activation information, the terminal receives or sends the positioning reference signal by using a first piece of TCI state or QCL signal or spatial relation information.
(5) A spatial relation used for initial access. For example, if a plurality of pieces of TCI state or QCL signal or spatial relation information are configured for the terminal, and the terminal does not receive activation information, the terminal receives or sends the positioning reference signal by using TCI state or QCL signal or spatial relation information used for initial access.
(6) An activated spatial relation. For example, if a plurality of pieces of TCI state or QCL signal or spatial relation information are configured for the terminal, and the terminal receives activation information for activating one piece of the information, the terminal receives or sends the positioning reference signal by using the activated TCI state or QCL signal or spatial relation information.
(7) A spatial relation indicated by a first rule, where the first rule is used to indicate a rule for using the plurality of spatial relations. For example, if a plurality of pieces of TCI state or QCL signal or spatial relation information are configured for the terminal, and a first rule exists, the terminal receives or sends the positioning reference signal by using TCI state or QCL signal or spatial relation information specified by the first rule.

In parallel with the foregoing embodiment, on a basis of the foregoing embodiment, in a case that one spatial relation and one spatial relation set are configured for the terminal, the method further includes: the terminal receives or sends the positioning reference signal by using one of the following:
(1) A spatial relation used for receiving a control resource set. For example, if a piece of TCI state or QCL signal or spatial relation information and a set of TCI state or QCL signal or spatial relation information are configured for the terminal, and the terminal does not receive activation information, the terminal receives or sends the positioning reference signal by using TCI state or QCL signal or spatial relation information used for receiving the control resource set.
(2) A configured spatial relation. For example, if a piece of TCI state or QCL signal or spatial relation information and a set of TCI state or QCL signal or spatial relation information are configured for the terminal, and the terminal does not receive activation information, the terminal receives or sends the positioning reference signal by using the configured TCI state or QCL signal or spatial relation information.
(3) A spatial relation used for initial access. For example, if a piece of TCI state or QCL signal or spatial relation information and a set of TCI state or QCL signal or spatial relation information are configured for the terminal, and the terminal does not receive activation information, the terminal receives or sends the positioning reference signal by using TCI state or QCL signal or spatial relation information used for initial access.
(4) An activated spatial relation. For example, if a piece of TCI state or QCL signal or spatial relation information and a set of TCI state or QCL signal or spatial relation information are configured for the terminal, and the terminal receives activation information for activating one piece in the set, the terminal receives or sends the positioning reference signal by using the activated TCI state or QCL signal or spatial relation information.
(5) A spatial relation indicated by a second rule, where the second rule is used to indicate a rule for using a plurality of spatial relations. For example, if a piece of TCI state or QCL signal or spatial relation information and a set of TCI state or QCL signal or spatial relation information are configured for the terminal, and a second rule exists, the terminal receives or sends the positioning reference signal by using TCI state or QCL signal or spatial relation information specified by the second rule.

On a basis of the foregoing embodiment, capability information supported by the terminal includes at least one of the following:
(1) support for configuring a plurality of spatial relations;
(2) support for configuring a plurality of spatial relations within one time unit;
(3) support for sending or receiving the positioning reference signal based on a PMI; and
(4) support for sending or receiving the positioning reference signal according to a rule of antenna or codebook mapping.

On a basis of the foregoing embodiment, optionally, if a spatial relation of a downlink positioning reference signal is updated, the method further includes: the terminal performs at least one of the following actions on an uplink signal that uses the downlink positioning reference signal as a spatial relation:
(1) updating, based on the updated spatial relation of the downlink positioning reference signal, spatial information corresponding to the uplink signal;
(2) sending first signaling to an LMF, where the first signaling includes the spatial relation of the downlink positioning reference signal and/or the spatial relation of the uplink signal; and
(3) sending the uplink signal based on the spatial relation of the downlink positioning reference signal when the uplink signal is configured.

On a basis of the foregoing embodiment, optionally, if a downlink positioning reference signal is used as a spatial relation of an uplink signal, the terminal does not update a spatial relation of the downlink positioning reference signal in a sending period of the uplink signal; and/or the terminal completes configuration or activation of a spatial relation of the downlink positioning reference signal before M time domain units (such as slots) in which the uplink signal is sent, where M is a positive integer.

To describe in detail the spatial relation indication method provided in this embodiment of this application, the following describes a specific embodiment. As shown in FIG. 4, this embodiment includes the following steps.

S402. A terminal sends a request message to an LMF.

The request message is used to request the LMF to configure or activate at least one of the following:
(1) priority information of spatial relations of a positioning reference signal;
(2) one or more spatial relations of a positioning reference signal; and
(3) an on-demand positioning reference signal.

S404. The LMF sends a configuration message to the terminal. For the configuration message, refer to the first message in the foregoing embodiment, where the first message is used to configure one or more spatial relations for a positioning reference signal.

S406. The terminal sends a request message to the LMF.

The request message is used to request the LMF to configure or activate at least one of the following:
(1) the priority information of the spatial relations of the positioning reference signal;
(2) the one or more spatial relations of the positioning reference signal; and
(3) the on-demand positioning reference signal.

S408. The LMF sends an activation message to the terminal. For the activation message, refer to the first message in the foregoing embodiment, where the first message is used to activate the one or more spatial relations for the positioning reference signal.

In other embodiments, S408 may be performed by an access network device (such as a base station). For example, S408 is replaced with "the base station sends an activation message to the terminal".

In this embodiment, after receiving the configuration message or the activation message, the terminal may perform the step of receiving or sending the positioning reference signal described in the foregoing embodiment.

It should be noted that S402, S406, and S408 are optional steps, which may or may not exist in an actual application and are marked by dashed lines in FIG. 4. In addition, S402 and S406 generally do not coexist. In addition, an access and mobility management function (Access and Mobility Management Function, AMF) in FIG. 4 plays a role of message forwarding.

The spatial relation indication method according to the embodiment of this application has been described in detail above with reference to FIG. 2. The following describes in detail a spatial relation indication method according to another embodiment of this application with reference to FIG. 3. It may be understood that the description of interaction between the network-side device and the terminal from the network-side device is the same as the description on the terminal side in the method shown in FIG. 2. To avoid repetition, related descriptions are appropriately omitted.

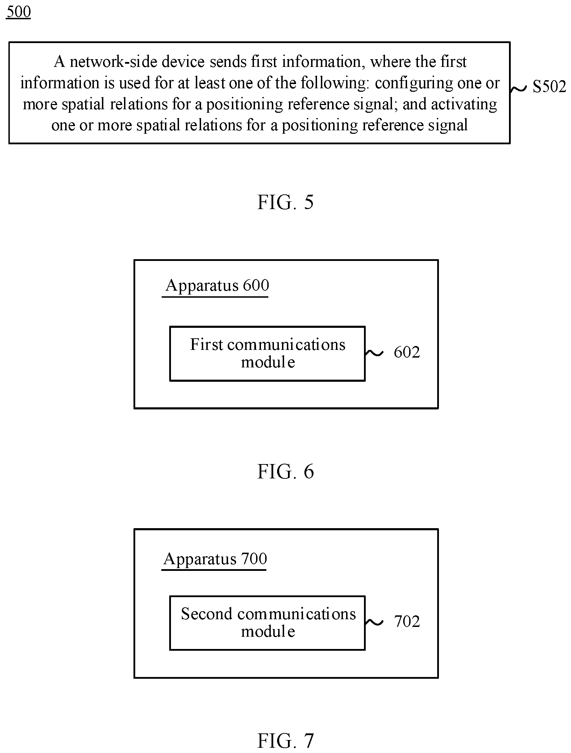

FIG. 5 is a schematic flowchart of a spatial relation indication method according to an embodiment of this application. The method may be applied to a network-side device. The network-side device may be an LMF, a base station, or the like. As shown in FIG. 5, the method 500 includes the following step.

S502. A network-side device sends first information, where the first information is used for at least one of the following: configuring one or more spatial relations for a positioning reference signal; and activating one or more spatial relations for a positioning reference signal.

In this embodiment of this application, the network-side device sends the first information, where the first information may configure and/or activate one or more spatial relations for the positioning reference signal. This helps implement transmission of the positioning reference signal, and helps avoid waste of positioning resources or inability to report a positioning measurement result in time, so that utilization of positioning resources is improved, or helps report a positioning measurement result in time.

Optionally, in an embodiment, in a case that the first information is used for configuring one or more spatial relations for a positioning reference signal, the first information includes at least one of the following:
(1) a spatial relation list, where the spatial relation list includes one or more spatial relations or one or more reference signals; and
(2) one or more spatial relations.

Optionally, in an embodiment, in a case that the first information is used for configuring one or more spatial relations for a positioning reference signal, the first information is further used for indicating at least one of the following:
(1) a plurality of positioning reference signals have a same spatial relation;
(2) a plurality of positioning reference signals have a same first spatial relation but different second spatial relations;
(3) a plurality of positioning reference signals are associated with a first reference signal, where a spatial range of the first reference signal is larger than a spatial range of the plurality of positioning reference signals;
(4) a positioning reference signal is associated with a first reference signal and a second reference signal, where a spatial range of the first reference signal is larger than a spatial range of the second reference signal; and
(5) a positioning reference signal is associated with a first reference signal and N second reference signals, where a spatial range of the first reference signal is larger than or equal to a spatial range of the N second reference signals, and N is a positive integer.

Optionally, in an embodiment, in a case that the first information is used for configuring a plurality of spatial relations for a positioning reference signal, the first information is further used for indicating at least one of the following:
(1) a plurality of positioning reference signals in a positioning reference signal resource set have a same spatial relation;
(2) a plurality of positioning reference signals in a positioning reference signal resource set have a same first spatial relation but different second spatial relations;
(3) a plurality of positioning reference signals in a positioning reference signal resource set are associated with a first reference signal, and a spatial range of the first reference signal is larger than a spatial range of the plurality of positioning reference signals;
(4) a second positioning reference signal in a second positioning reference signal resource set has an integer relation with a first positioning reference signal in a first positioning reference signal resource set;
(5) a second positioning reference signal in a second positioning reference signal resource set has an integer relation with a first positioning reference signal in a first positioning reference signal resource subset; and
(6) if second positioning reference signals in a second positioning reference signal resource set have a same first spatial relation with first positioning reference signals in a first positioning reference signal resource set, a quantity of the second positioning reference signals has an integer relation with a quantity of the first positioning reference signals.

Optionally, in an embodiment, the first information is used for indicating at least one of the following:
(1) one positioning reference signal has a plurality of repetitions, where the plurality of repetitions are mapped to different antenna ports and/or precoding information;
(2) the plurality of positioning reference signals in the positioning reference signal resource set are mapped to different antenna ports and/or precoding information;
(3) the positioning reference signal has a plurality of periods, where the plurality of periods are mapped to different antenna ports and/or precoding information;
(4) one positioning reference signal has a plurality of repetitions, where the plurality of repetitions are associated with different spatial relations; and
(5) the plurality of positioning reference signals in the positioning reference signal resource set are associated with different spatial relations.

Optionally, in an embodiment, the first information is used for at least one of the following: configuring one or more spatial relations for an on-demand positioning reference signal; and activating one or more spatial relations for an on-demand positioning reference signal.

Optionally, in an embodiment, the first information is used for configuring at least one of the following for the on-demand positioning reference signal:
(1) a spatial relation list, where the spatial relation list includes one or more spatial relations;
(2) one or more spatial relations;
(3) one or more pieces of expected angle of departure AoD direction information and/or width information; and
(4) one or more pieces of expected angle of arrival AoA direction information and/or width information.

Optionally, in an embodiment, the first information is used for configuring at least one of the following for the on-demand positioning reference signal:
(1) the on-demand positioning reference signal is associated with one or more positioning reference signals;
(2) one or more on-demand positioning reference signals are associated with one positioning reference signal or associated with one on-demand positioning reference signal; and
(3) the on-demand positioning reference signal has an integer relation with an associated positioning reference signal.

Optionally, in an embodiment, the first information is used for configuring at least one of the following for the on-demand positioning reference signal:
(1) a plurality of on-demand positioning reference signals have a same spatial relation;
(2) a plurality of on-demand positioning reference signals have a same first spatial relation but different second spatial relations;
(3) a plurality of on-demand positioning reference signals are associated with a first reference signal, where a spatial range of the first reference signal is larger than a spatial range of the plurality of on-demand positioning reference signals;
(4) a plurality of on-demand positioning reference signals are associated with a positioning reference signal, where a spatial range of the positioning reference signal is larger than a spatial range of the plurality of on-demand positioning reference signals; and
(5) a plurality of on-demand positioning reference signals are associated with a first reference signal and N second reference signals, where a spatial range of the first reference signal is larger than or equal to a spatial range of the N second reference signals.

Optionally, in an embodiment, in a case that the first information is used for activating one or more spatial relations for a positioning reference signal, the sending first information includes one of the following:
(1) sending MAC CE signaling, where the MAC CE signaling is used to activate one or more spatial relations for the positioning reference signal;
(2) sending DCI, where the DCI includes indication information of one or more spatial relations of the positioning reference signal; and
(3) sending positioning protocol signaling, where the positioning protocol signaling includes an activation command, and the activation command is used to activate one or more spatial relations for the positioning reference signal.

Optionally, in an embodiment, the method further includes: the network-side device receives or sends the positioning reference signal by using one or more spatial relations.

Optionally, in an embodiment, that the network-side device receives or sends the positioning reference signal by using one spatial relation includes one of the following:
(1) the network-side device receives or sends the positioning reference signal in a plurality of periods, repetitions, or resources by using one spatial relation; and
(2) the network-side device receives or sends the positioning reference signal in a plurality of periods, repetitions, resources, frequency division multiplexing, or time division multiplexing sequentially by using one spatial relation.

Optionally, in an embodiment, if a spatial relation of a downlink positioning reference signal is updated, the method further includes: the network-side device performs at least one of the following actions on an uplink signal that uses the downlink positioning reference signal as a spatial relation:
(1) updating, based on the updated spatial relation of the downlink positioning reference signal, spatial information corresponding to the uplink signal;
(2) sending first signaling to a location management function LMF, where the first signaling includes the spatial relation of the downlink positioning reference signal and/or the spatial relation of the uplink signal; and
(3) receiving the uplink signal based on the spatial relation of the downlink positioning reference signal when the uplink signal is configured.

Optionally, in an embodiment, if a downlink positioning reference signal is used as a spatial relation of an uplink signal, the network-side device does not update a spatial relation of the downlink positioning reference signal in a sending period of the uplink signal; and/or the network-side device completes configuration or activation of a spatial relation of the downlink positioning reference signal before M time domain units in which the uplink signal is sent, where M is a positive integer.

It should be noted that the spatial relation indication method provided in this embodiment of this application may be performed by a spatial relation indication apparatus or a control module for performing the spatial relation indication method in the spatial relation indication apparatus. A spatial relation indication apparatus provided in an embodiment of this application is described by assuming that the spatial relation indication method in this embodiment of this application is performed by the spatial relation indication apparatus.

FIG. 6 is a schematic diagram of a structure of a spatial relation indication apparatus according to an embodiment of this application. The apparatus may correspond to a terminal in other embodiments. As shown in FIG. 6, the apparatus 600 includes the following module:
a first communications module 602, which may be configured to receive first information, where the first information is used for at least one of the following: configuring one or more spatial relations for a positioning reference signal; and activating one or more spatial relations for a positioning reference signal.

Optionally, the apparatus 600 further includes a first determining module, which may be configured to determine the first information.

In this embodiment of this application, the apparatus 600 (such as a terminal) receives the first information, where the first information may configure and/or activate one or more spatial relations for the positioning reference signal. This helps implement transmission of the positioning reference signal, and helps avoid waste of positioning resources or inability to report a positioning measurement result in time, so that utilization of positioning resources is improved, or helps report a positioning measurement result in time.

Optionally, in an embodiment, in a case that the first information is used for configuring one or more spatial relations for a positioning reference signal, the first information includes at least one of the following:
(1) a spatial relation list, where the spatial relation list includes one or more spatial relations or one or more reference signals; and
(2) one or more spatial relations.

Optionally, in an embodiment, a mapping relationship between the positioning reference signal and the spatial relation list includes one of the following:
(1) one positioning reference signal corresponds to one spatial relation list;
(2) one positioning reference signal corresponds to a plurality of spatial relation lists;
(3) a plurality of positioning reference signals correspond to one spatial relation list; and
(4) a plurality of positioning reference signals correspond to a plurality of spatial relation lists.

Optionally, in an embodiment, the first information includes at least one of the following:
(1) a PMI list, where the PMI list includes one or more PMIs;
(2) a precoding information list, where the precoding information list includes one or more pieces of precoding information;
(3) one or more PMIs;
(4) one or more pieces of precoding information; and
(5) a plurality of first mapping relationships, where the first mapping relationships include mapping relationships between positioning reference signals and antenna ports.

Optionally, in an embodiment, in a case that the first information is used for configuring one or more spatial relations for a positioning reference signal, the first information is further used for indicating at least one of the following:
(1) a plurality of positioning reference signals have a same spatial relation;
(2) a plurality of positioning reference signals have a same first spatial relation but different second spatial relations;
(3) a plurality of positioning reference signals are associated with a first reference signal, where a spatial range of the first reference signal is larger than a spatial range of the plurality of positioning reference signals;
(4) a positioning reference signal is associated with a first reference signal and a second reference signal, where a spatial range of the first reference signal is larger than a spatial range of the second reference signal; and
(5) a positioning reference signal is associated with a first reference signal and N second reference signals, where a spatial range of the first reference signal is larger than or equal to a spatial range of the N second reference signals, and N is a positive integer.

Optionally, in an embodiment, in a case that the first information is used for configuring a plurality of spatial relations for a positioning reference signal, the first information is further used for indicating at least one of the following:
(1) a plurality of positioning reference signals in a positioning reference signal resource set have a same spatial relation;
(2) a plurality of positioning reference signals in a positioning reference signal resource set have a same first spatial relation but different second spatial relations;
(3) a plurality of positioning reference signals in a positioning reference signal resource set are associated with a first reference signal, and a spatial range of the first reference signal is larger than a spatial range of the plurality of positioning reference signals;
(4) a second positioning reference signal in a second positioning reference signal resource set has an integer relation with a first positioning reference signal in a first positioning reference signal resource set;
(5) a second positioning reference signal in a second positioning reference signal resource set has an integer relation with a first positioning reference signal in a first positioning reference signal resource subset; and
(6) if second positioning reference signals in a second positioning reference signal resource set have a same first spatial relation with first positioning reference signals in a first positioning reference signal resource set, a quantity of the second positioning reference signals has an integer relation with a quantity of the first positioning reference signals.

Optionally, in an embodiment, the first information is used for indicating at least one of the following:
(1) one positioning reference signal has a plurality of repetitions, where the plurality of repetitions are mapped to different antenna ports and/or precoding information;
(2) the plurality of positioning reference signals in the positioning reference signal resource set are mapped to different antenna ports and/or precoding information;
(3) the positioning reference signal has a plurality of periods, where the plurality of periods are mapped to different antenna ports and/or precoding information;
(4) one positioning reference signal has a plurality of repetitions, where the plurality of repetitions are associated with different spatial relations;
(5) the plurality of positioning reference signals in the positioning reference signal resource set are associated with different spatial relations; and
(6) the positioning reference signal has a plurality of periods, where the plurality of periods are associated with different spatial relations.

Optionally, in an embodiment, a spatial range of the first spatial relation is larger than a spatial range of the second spatial relation.

Optionally, in an embodiment, the first information is used for at least one of the following: configuring one or more spatial relations for an on-demand positioning reference signal; and activating one or more spatial relations for an on-demand positioning reference signal.

Optionally, in an embodiment, the first information is used for configuring at least one of the following for the on-demand positioning reference signal:
(1) a spatial relation list, where the spatial relation list includes one or more spatial relations;
(2) one or more spatial relations;
(3) one or more pieces of expected angle of departure AoD direction information and/or width information; and
(4) one or more pieces of expected angle of arrival AoA direction information and/or width information.

Optionally, in an embodiment, the first information is used for configuring at least one of the following for the on-demand positioning reference signal:
(1) the on-demand positioning reference signal is associated with one or more positioning reference signals;
(2) one or more on-demand positioning reference signals are associated with one positioning reference signal or associated with one on-demand positioning reference signal; and
(3) the on-demand positioning reference signal has an integer relation with an associated positioning reference signal.

Optionally, in an embodiment, the first information is used for configuring at least one of the following for the on-demand positioning reference signal:
(1) a plurality of on-demand positioning reference signals have a same spatial relation;
(2) a plurality of on-demand positioning reference signals have a same first spatial relation but different second spatial relations;
(3) a plurality of on-demand positioning reference signals are associated with a first reference signal, where a spatial range of the first reference signal is larger than a spatial range of the plurality of on-demand positioning reference signals;
(4) a plurality of on-demand positioning reference signals are associated with a positioning reference signal, where a spatial range of the positioning reference signal is larger than a spatial range of the plurality of on-demand positioning reference signals; and
(5) a plurality of on-demand positioning reference signals are associated with a first reference signal and N second reference signals, where a spatial range of the first reference signal is larger than or equal to a spatial range of the N second reference signals.

Optionally, in an embodiment, in a case that the first information is used for activating one or more spatial relations for a positioning reference signal, the first communications module 602 may be configured to perform one of the following:
(1) receiving MAC CE signaling, where the MAC CE signaling is used to activate one or more spatial relations for the positioning reference signal;
(2) receiving DCI, where the DCI includes indication information of one or more spatial relations of the positioning reference signal; and
(3) receiving positioning protocol signaling, where the positioning protocol signaling includes an activation command, and the activation command is used to activate one or more spatial relations for the positioning reference signal.

Optionally, in an embodiment, the first information further includes at least one of the following: a PCI, identification information of a non-serving cell, and frequency information, where at least one of the following of the non-serving cell can be configured as one or more spatial relations of the positioning reference signal: an SSB, a positioning reference signal, a sounding reference signal, and a CSI-RS.

Optionally, in an embodiment, the activation command is used for at least one of the following:
(1) carrying identification information of the positioning reference signal;
(2) carrying identification information of one or more spatial relations;
(3) carrying identification information of a spatial relation list;
(4) activating a spatial relation corresponding to a first subset of the positioning reference signal or a beam in a first direction;
(5) angle of departure AoD direction information and/or width information; and
(6) angle of arrival AoA direction information and/or width information.

Optionally, in an embodiment, the activation command includes indication information, and the indication information indicates that the positioning reference signal is to be sent or received based on specific or predefined precoding information; or the positioning protocol signaling includes precoding information, and the positioning reference signal corresponds to one or more pieces of the precoding information; or the activation command includes indication information, and the indication information indicates that the positioning reference signal is to be sent or received based on a specific or predefined antenna port and/or precoding information; or the activation command includes indication information, and the indication information indicates that the positioning reference signal is to be sent or received based on specific or predefined spatial relation information.

Optionally, in an embodiment, the first communications module 602 may be further configured to send a request message, where the request message is used to request to configure at least one of the following:
(1) priority information of spatial relations of the positioning reference signal;
(2) one or more spatial relations of the positioning reference signal; and
(3) an on-demand positioning reference signal.

Optionally, in an embodiment, the first communications module 602 may be further configured to receive or send the positioning reference signal by using one or more spatial relations.

Optionally, in an embodiment, the first communications module 602 may be further configured to perform one of the following:
(1) receiving or sending the positioning reference signal in a plurality of periods, repetitions, or resources by using one spatial relation; and
(2) receiving or sending the positioning reference signal in a plurality of periods, repetitions, resources, frequency division multiplexing, or time division multiplexing sequentially by using one spatial relation.

Optionally, in an embodiment, the first communications module 602 may be further configured to perform one of the following:
(1) receiving or sending the positioning reference signal in the plurality of periods, repetitions, or resources by using different spatial relations; and
(2) receiving or sending the positioning reference signal on a plurality of time domain resources or frequency domain resources by using different spatial relations.

Optionally, in an embodiment, the first communications module 602 may be further configured to perform one of the following:
(1) receiving or sending the positioning reference signal in a plurality of periods, repetitions, or resources sequentially by using different spatial relations in a spatial relation list;
(2) receiving or sending the positioning reference signal in a plurality of periods, repetitions, or resources sequentially by using different spatial relations in the plurality of spatial relations;
(3) receiving or sending the positioning reference signal in a plurality of periods, repetitions, or resources sequentially by using activated different spatial relations in a spatial relation list; and
(4) receiving or sending the positioning reference signal in a plurality of periods, repetitions, or resources sequentially by using activated different spatial relations in the plurality of spatial relations.

Optionally, in an embodiment, the spatial relation includes at least one of the following: a PMI, precoding information, an antenna port and/or panel information, spatial relation reference signal information, a TCI state, QCL information, and a path loss reference signal.

Optionally, in an embodiment, in a case that a plurality of spatial relations are configured for the apparatus, the first communications module 602 may be further configured to receive or send the positioning reference signal by using one of the following:
(1) a spatial relation used for receiving a control resource set;
(2) a default spatial relation;
(3) a preconfigured spatial relation;
(4) a first spatial relation;
(5) a spatial relation used for initial access;
(6) an activated spatial relation; and
(7) a spatial relation indicated by a first rule, where the first rule is used to indicate a rule for using the plurality of spatial relations.

Optionally, in an embodiment, in a case that one spatial relation and one spatial relation set are configured for the apparatus, the first communications module 602 may be further configured to receive or send the positioning reference signal by using one of the following:
(1) a spatial relation used for receiving a control resource set;
(2) a configured spatial relation;
(3) a spatial relation used for initial access;
(4) an activated spatial relation; and
(5) a spatial relation indicated by a second rule, where the second rule is used to indicate a rule for using a plurality of spatial relations.

Optionally, in an embodiment, capability information supported by the apparatus includes at least one of the following:
(1) support for configuring a plurality of spatial relations;
(2) support for configuring a plurality of spatial relations within one time unit;
(3) support for sending or receiving the positioning reference signal based on a PMI; and
(4) support for sending or receiving the positioning reference signal according to a rule of antenna or codebook mapping.

Optionally, in an embodiment, if a spatial relation of a downlink positioning reference signal is updated, the apparatus may be further configured to perform at least one of the following actions on an uplink signal that uses the downlink positioning reference signal as a spatial relation:
(1) updating, based on the updated spatial relation of the downlink positioning reference signal, spatial information corresponding to the uplink signal;
(2) sending first signaling to an LMF, where the first signaling includes the spatial relation of the downlink positioning reference signal and/or the spatial relation of the uplink signal; and
(3) sending the uplink signal based on the spatial relation of the downlink positioning reference signal when the uplink signal is configured.

Optionally, in an embodiment, if a downlink positioning reference signal is used as a spatial relation of an uplink signal, the apparatus does not update a spatial relation of the downlink positioning reference signal in a sending period of the uplink signal; and/or the apparatus completes configuration or activation of a spatial relation of the downlink positioning reference signal before M time domain units (such as slots) in which the uplink signal is sent, where M is a positive integer.

For the apparatus 600 in this embodiment of this application, refer to the processes of the method 200 in the corresponding embodiment of this application. In addition, the units/modules of the apparatus 600 and other operations and/or functions described above are used to implement the corresponding processes of the method 200, with the same or equivalent technical effect achieved. For brevity, details are not described herein again.

The spatial relation indication apparatus in this embodiment of this application may be an apparatus, an apparatus with an operating system or an electronic device, or may be a component, an integrated circuit, or a chip in the terminal. The apparatus or the electronic device may be a mobile terminal, or may be a nonmobile terminal. For example, the mobile terminal may include but is not limited to the foregoing illustrated type of the terminal 11. The nonmobile terminal may be a server, a network attached storage (Network Attached Storage, NAS), a personal computer (personal computer, PC), a television (television, TV), a teller machine, a self-service machine, or the like. This is not specifically limited in this embodiment of this application.

The spatial relation indication apparatus provided in this embodiment of this application can implement each process implemented by the method embodiments in FIG. 2 to FIG. 5, with the same technical effect achieved. To avoid repetition, details are not described herein again.

FIG. 7 is a schematic diagram of a structure of a spatial relation indication apparatus according to an embodiment of this application. The apparatus may correspond to a network-side device in other embodiments. As shown in FIG. 7, the apparatus 700 includes the following module:
a second communications module 702, which may be configured to send first information, where the first information is used for at least one of the following: configuring one or more spatial relations for a positioning reference signal; and activating one or more spatial relations for a positioning reference signal.

Optionally, the apparatus 700 further includes a second determining module, which may be configured to determine the first information.

In this embodiment of this application, the apparatus 700 sends the first information, where the first information may configure and/or activate one or more spatial relations for the positioning reference signal. This helps implement transmission of the positioning reference signal, and helps avoid waste of positioning resources or inability to report a positioning measurement result in time, so that utilization of positioning resources is improved, or helps report a positioning measurement result in time.

Optionally, in an embodiment, in a case that the first information is used for configuring one or more spatial relations for a positioning reference signal, the first information includes at least one of the following:
(1) a spatial relation list, where the spatial relation list includes one or more spatial relations or one or more reference signals; and
(2) one or more spatial relations.

Optionally, in an embodiment, in a case that the first information is used for configuring one or more spatial relations for a positioning reference signal, the first information is further used for indicating at least one of the following:
(1) a plurality of positioning reference signals have a same spatial relation;
(2) a plurality of positioning reference signals have a same first spatial relation but different second spatial relations;
(3) a plurality of positioning reference signals are associated with a first reference signal, where a spatial range of the first reference signal is larger than a spatial range of the plurality of positioning reference signals;
(4) a positioning reference signal is associated with a first reference signal and a second reference signal, where a spatial range of the first reference signal is larger than a spatial range of the second reference signal; and
(5) a positioning reference signal is associated with a first reference signal and N second reference signals, where a spatial range of the first reference signal is larger than or equal to a spatial range of the N second reference signals, and N is a positive integer.

Optionally, in an embodiment, in a case that the first information is used for configuring a plurality of spatial relations for a positioning reference signal, the first information is further used for indicating at least one of the following:
(1) a plurality of positioning reference signals in a positioning reference signal resource set have a same spatial relation;
(2) a plurality of positioning reference signals in a positioning reference signal resource set have a same first spatial relation but different second spatial relations;
(3) a plurality of positioning reference signals in a positioning reference signal resource set are associated with a first reference signal, and a spatial range of the first reference signal is larger than a spatial range of the plurality of positioning reference signals;
(4) a second positioning reference signal in a second positioning reference signal resource set has an integer relation with a first positioning reference signal in a first positioning reference signal resource set;
(5) a second positioning reference signal in a second positioning reference signal resource set has an integer relation with a first positioning reference signal in a first positioning reference signal resource subset; and
(6) if second positioning reference signals in a second positioning reference signal resource set have a same first spatial relation with first positioning reference signals in a first positioning reference signal resource set, a quantity of the second positioning reference signals has an integer relation with a quantity of the first positioning reference signals.

Optionally, in an embodiment, the first information is used for indicating at least one of the following:
(1) one positioning reference signal has a plurality of repetitions, where the plurality of repetitions are mapped to different antenna ports and/or precoding information;
(2) the plurality of positioning reference signals in the positioning reference signal resource set are mapped to different antenna ports and/or precoding information;
(3) the positioning reference signal has a plurality of periods, where the plurality of periods are mapped to different antenna ports and/or precoding information;
(4) one positioning reference signal has a plurality of repetitions, where the plurality of repetitions are associated with different spatial relations; and
(5) the plurality of positioning reference signals in the positioning reference signal resource set are associated with different spatial relations.

Optionally, in an embodiment, the first information is used for at least one of the following: configuring one or more spatial relations for an on-demand positioning reference signal; and activating one or more spatial relations for an on-demand positioning reference signal.

Optionally, in an embodiment, the first information is used for configuring at least one of the following for the on-demand positioning reference signal:
(1) a spatial relation list, where the spatial relation list includes one or more spatial relations;
(2) one or more spatial relations;
(3) one or more pieces of expected angle of departure AoD direction information and/or width information; and
(4) one or more pieces of expected angle of arrival AoA direction information and/or width information.

Optionally, in an embodiment, the first information is used for configuring at least one of the following for the on-demand positioning reference signal:
(1) the on-demand positioning reference signal is associated with one or more positioning reference signals;
(2) one or more on-demand positioning reference signals are associated with one positioning reference signal or associated with one on-demand positioning reference signal; and
(3) the on-demand positioning reference signal has an integer relation with an associated positioning reference signal.

Optionally, in an embodiment, the first information is used for configuring at least one of the following for the on-demand positioning reference signal:
(1) a plurality of on-demand positioning reference signals have a same spatial relation;
(2) a plurality of on-demand positioning reference signals have a same first spatial relation but different second spatial relations;
(3) a plurality of on-demand positioning reference signals are associated with a first reference signal, where a spatial range of the first reference signal is larger than a spatial range of the plurality of on-demand positioning reference signals;
(4) a plurality of on-demand positioning reference signals are associated with a positioning reference signal, where a spatial range of the positioning reference signal is larger than a spatial range of the plurality of on-demand positioning reference signals; and
(5) a plurality of on-demand positioning reference signals are associated with a first reference signal and N second reference signals, where a spatial range of the first reference signal is larger than or equal to a spatial range of the N second reference signals.

Optionally, in an embodiment, in a case that the first information is used for activating one or more spatial relations for a positioning reference signal, the second communications module 702 is configured to perform one of the following:
(1) sending MAC CE signaling, where the MAC CE signaling is used to activate one or more spatial relations for the positioning reference signal;
(2) sending DCI, where the DCI includes indication information of one or more spatial relations of the positioning reference signal; and
(3) sending positioning protocol signaling, where the positioning protocol signaling includes an activation command, and the activation command is used to activate one or more spatial relations for the positioning reference signal.

Optionally, in an embodiment, the second communications module 702 may be configured to receive or send the positioning reference signal by using one or more spatial relations.

Optionally, in an embodiment, that the second communications module 702 receives or sends the positioning reference signal by using one spatial relation includes one of the following:
(1) the second communications module 702 receives or sends the positioning reference signal in a plurality of periods, repetitions, or resources by using one spatial relation; and
(2) the second communications module 702 receives or sends the positioning reference signal in a plurality of periods, repetitions, resources, frequency division multiplexing, or time division multiplexing sequentially by using one spatial relation.

Optionally, in an embodiment, if a spatial relation of a downlink positioning reference signal is updated, the second communications module 702 is further configured to perform at least one of the following actions on an uplink signal that uses the downlink positioning reference signal as a spatial relation:
(1) updating, based on the updated spatial relation of the downlink positioning reference signal, spatial information corresponding to the uplink signal;
(2) sending first signaling to an LMF, where the first signaling includes the spatial relation of the downlink positioning reference signal and/or the spatial relation of the uplink signal; and
(3) receiving the uplink signal based on the spatial relation of the downlink positioning reference signal when the uplink signal is configured.

Optionally, in an embodiment, if a downlink positioning reference signal is used as a spatial relation of an uplink signal, the apparatus does not update a spatial relation of the downlink positioning reference signal in a sending period of the uplink signal; and/or the apparatus completes configuration or activation of a spatial relation of the downlink positioning reference signal before M time domain units in which the uplink signal is sent, where M is a positive integer.

For the apparatus 700 in this embodiment of this application, refer to the processes of the method 500 in the corresponding embodiment of this application. In addition, the units/modules of the apparatus 700 and other operations and/or functions described above are used to implement the corresponding processes of the method 500, with the same or equivalent technical effect achieved. For brevity, details are not described herein again.

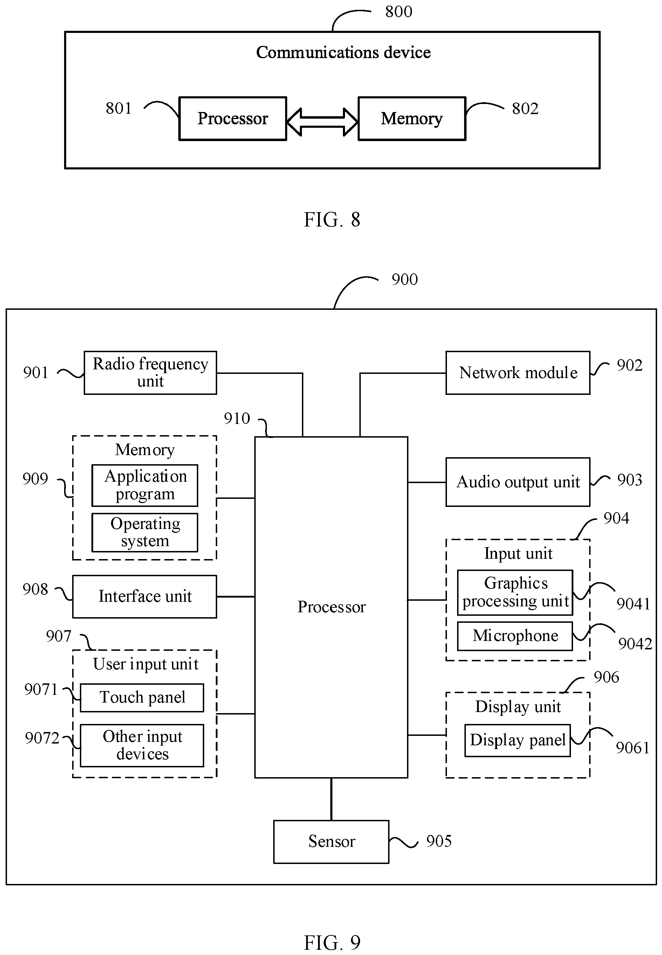

Optionally, as shown in FIG. 8, an embodiment of this application further provides a communications device 800, including a processor 801, a memory 802, and a program or instructions stored in the memory 802 and capable of running on the processor 801. For example, when the communications device 800 is a terminal, and the program or instructions are executed by the processor 801, each process of the foregoing spatial relation indication method embodiment is implemented, with the same technical effect achieved. When the communications device 800 is a network-side device, and the program or instructions are executed by the processor 801, each process of the foregoing spatial relation indication method embodiment is implemented, with the same technical effect achieved. To avoid repetition, details are not described herein again.

An embodiment of this application further provides a terminal, including a processor and a communications interface. The communications interface is configured to receive first information, where the first information is used for at least one of the following: configuring one or more spatial relations for a positioning reference signal; and activating one or more spatial relations for a positioning reference signal. The terminal embodiment corresponds to the foregoing terminal-side method embodiment, and each implementation process and implementation of the foregoing method embodiment can be applied to the terminal embodiment, with the same technical effect achieved. Specifically, FIG. 9 is a schematic diagram of a hardware structure of a terminal for implementing an embodiment of this application.

The terminal 900 includes but is not limited to at least some components such as a radio frequency unit 901, a network module 902, an audio output unit 903, an input unit 904, a sensor 905, a display unit 906, a user input unit 907, an interface unit 908, a memory 909, and a processor 910.

A person skilled in the art may understand that the terminal 900 may further include a power supply (for example, a battery) supplying power to all components. The power supply may be logically connected to the processor 910 through a power management system. In this way, functions such as charge management, discharge management, and power consumption management are implemented by using the power management system. The terminal structure shown in FIG. 9 does not constitute a limitation on the terminal. The terminal may include more or fewer components than those shown in the figure, or some components are combined, or component arrangements are different. Details are not described herein again.

It should be understood that, in this embodiment of this application, the input unit 904 may include a graphics processing unit (Graphics Processing Unit, GPU) 9041 and a microphone 9042. The graphics processing unit 9041 processes image data of a still picture or video obtained by an image capture apparatus (such as a camera) in a video capture mode or an image capture mode. The display unit 906 may include a display panel 9061, and the display panel 9061 may be configured in a form of a liquid crystal display, an organic light-emitting diode, or the like. The user input unit 907 includes a touch panel 9071 and other input devices 9072. The touch panel 9071 is also referred to as a touchscreen. The touch panel 9071 may include two parts: a touch detection apparatus and a touch controller. The other input devices 9072 may include but are not limited to a physical keyboard, a function key (such as a volume control key or a switch key), a trackball, a mouse, and a joystick. Details are not described herein again.

In this embodiment of this application, after receiving downlink data from a network-side device, the radio frequency unit 901 sends the downlink data to the processor 910 for processing, and in addition, sends uplink data to the network-side device. Generally, the radio frequency unit 901 includes but is not limited to an antenna, at least one amplifier, a transceiver, a coupler, a low noise amplifier, a duplexer, and the like.

The memory 909 may be configured to store software programs or instructions and various data. The memory 909 may primarily include a program or instruction storage area and a data storage area. The program or instruction storage area may store an operating system, an application program or instructions (such as an audio play function and an image play function) required by at least one function, and the like. In addition, the memory 909 may include a high-speed random access memory, and may further include a non-transitory memory. The non-transitory memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-transitory solid-state storage device.

The processor 910 may include one or more processing units. Optionally, the processor 910 may integrate an application processor and a modem processor. The application processor mainly processes the operating system, a user interface, an application program, or instructions. The modem processor mainly processes wireless communication. For example, the modem processor is a baseband processor. It may be understood that the modem processor may alternatively be not integrated in the processor 910.

The radio frequency unit 901 may be configured to receive first information, where the first information is used for at least one of the following: configuring one or more spatial relations for a positioning reference signal; and activating one or more spatial relations for a positioning reference signal.

In this embodiment of this application, the terminal receives the first information, where the first information may configure and/or activate one or more spatial relations for the positioning reference signal. This helps implement transmission of the positioning reference signal, and helps avoid waste of positioning resources or inability to report a positioning measurement result in time, so that utilization of positioning resources is improved, or helps report a positioning measurement result in time.

The terminal 900 provided in this embodiment of this application can further implement each process of the spatial relation indication method embodiment, with the same technical effect achieved. To avoid repetition, details are not described herein again.

An embodiment of this application further provides a network-side device, including a processor and a communications interface. The communications interface is configured to send first information, where the first information is used for at least one of the following: configuring one or more spatial relations for a positioning reference signal; and activating one or more spatial relations for a positioning reference signal. The network-side device embodiment corresponds to the foregoing method embodiment of the network-side device, and each implementation process and implementation of the foregoing method embodiment can be applied to the network-side device embodiment, with the same technical effect achieved.

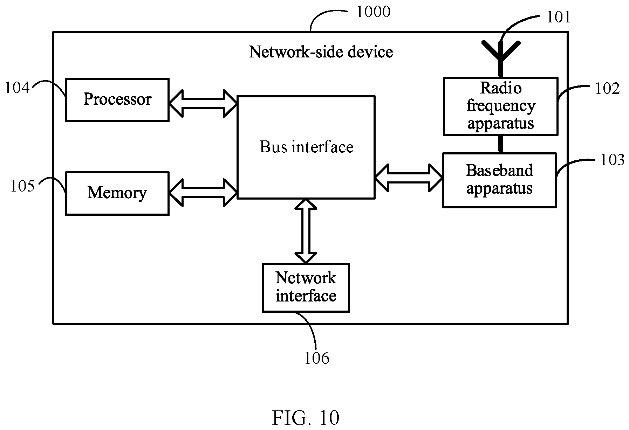

Specifically, an embodiment of this application further provides a network-side device. As shown in FIG. 10, the network-side device 1000 includes an antenna 101, a radio frequency apparatus 102, and a baseband apparatus 103. The antenna 101 is connected to the radio frequency apparatus 102. In an uplink direction, the radio frequency apparatus 102 receives information by using the antenna 101, and sends the received information to the baseband apparatus 103 for processing. In a downlink direction, the baseband apparatus 103 processes to-be-sent information, and sends the information to the radio frequency apparatus 102; and the radio frequency apparatus 102 processes the received information and then sends the information out by using the antenna 101.

The frequency band processing apparatus may be located in the baseband apparatus 103. The method performed by the network-side device in the foregoing embodiment may be implemented in the baseband apparatus 103, and the baseband apparatus 103 includes a processor 104 and a memory 105.

The baseband apparatus 103 may include, for example, at least one baseband processing unit, where a plurality of chips are disposed on the baseband processing unit. As shown in FIG. 10, one of the chips is, for example, the processor 104, connected to the memory 105, to invoke a program in the memory 105 to perform the operation of the network-side device shown in the foregoing method embodiment.

The baseband apparatus 103 may further include a network interface 106, configured to exchange information with the radio frequency apparatus 102, where the interface is, for example, a common public radio interface (common public radio interface, CPRI for short).

Specifically, the network-side device in this embodiment of this application further includes a program or instructions stored in the memory 105 and capable of running on the processor 104. When the processor 104 invokes the program or instructions in the memory 105, the method performed by each module shown in FIG. 7 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing spatial relation indication method embodiment is implemented, with the same technical effect achieved. To avoid repetition, details are not described herein again.

The processor may a processor in the terminal in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

In addition, an embodiment of this application provides a chip, where the chip includes a processor and a communications interface, the communications interface is coupled to the processor, and the processor is configured to run a program or instructions to implement each process of the foregoing spatial relation indication method embodiment, with the same technical effect achieved. To avoid repetition, details are not described herein again.

It should be understood that the chip provided in this embodiment of this application may also be referred to as a system-level chip, a system chip, a chip system, a system-on-chip, or the like.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network-side device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A spatial relation indication method, comprising:
receiving, by a terminal, first information, wherein the first information is used for at least one of the following: configuring one or more spatial relations for a positioning reference signal; and activating one or more spatial relations for a positioning reference signal.

2. The method according to claim 1, wherein in a case that the first information is used for configuring one or more spatial relations for a positioning reference signal, the first information comprises at least one of the following:
a spatial relation list, wherein the spatial relation list comprises one or more spatial relations or one or more reference signals; and
one or more spatial relations.

3. The method according to claim 2, wherein a mapping relationship between the positioning reference signal and the spatial relation list comprises one of the following:
one positioning reference signal corresponds to one spatial relation list;
one positioning reference signal corresponds to a plurality of spatial relation lists;
a plurality of positioning reference signals correspond to one spatial relation list; and
a plurality of positioning reference signals correspond to a plurality of spatial relation lists.

4. The method according to claim 2, wherein the first information comprises at least one of the following:
a precoding matrix indicator PMI list, wherein the PMI list comprises one or more PMIs;
a precoding information list, wherein the precoding information list comprises one or more pieces of precoding information;
one or more PMIs;
one or more pieces of precoding information; and
a plurality of first mapping relationships, wherein the first mapping relationships comprise mapping relationships between positioning reference signals and antenna ports.

5. The method according to claim 1, wherein in a case that the first information is used for configuring one or more spatial relations for a positioning reference signal, the first information is further used for indicating at least one of the following:
a plurality of positioning reference signals have a same spatial relation;
a plurality of positioning reference signals have a same first spatial relation but different second spatial relations;
a plurality of positioning reference signals are associated with a first reference signal, wherein a spatial range of the first reference signal is larger than a spatial range of the plurality of positioning reference signals;
a positioning reference signal is associated with a first reference signal and a second reference signal, wherein a spatial range of the first reference signal is larger than a spatial range of the second reference signal; and
a positioning reference signal is associated with a first reference signal and N second reference signals, wherein a spatial range of the first reference signal is larger than or equal to a spatial range of the N second reference signals, and N is a positive integer.

6. The method according to claim 1, wherein in a case that the first information is used for configuring a plurality of spatial relations for a positioning reference signal, the first information is further used for indicating at least one of the following:
a plurality of positioning reference signals in a positioning reference signal resource set have a same spatial relation;
a plurality of positioning reference signals in a positioning reference signal resource set have a same first spatial relation but different second spatial relations;
a plurality of positioning reference signals in a positioning reference signal resource set are associated with a first reference signal, and a spatial range of the first reference signal is larger than a spatial range of the plurality of positioning reference signals;
a second positioning reference signal in a second positioning reference signal resource set has an integer relation with a first positioning reference signal in a first positioning reference signal resource set;
a second positioning reference signal in a second positioning reference signal resource set has an integer relation with a first positioning reference signal in a first positioning reference signal resource subset; and
in a case that second positioning reference signals in a second positioning reference signal resource set have a same first spatial relation with first positioning reference signals in a first positioning reference signal resource set, a quantity of the second positioning reference signals has an integer relation with a quantity of the first positioning reference signals.

7. The method according to claim 6, wherein the first information is used for indicating at least one of the following:
one positioning reference signal has a plurality of repetitions, wherein the plurality of repetitions are mapped to different antenna ports and/or precoding information;
the plurality of positioning reference signals in the positioning reference signal resource set are mapped to different antenna ports and/or precoding information;
the positioning reference signal has a plurality of periods, wherein the plurality of periods are mapped to different antenna ports and/or precoding information;
one positioning reference signal has a plurality of repetitions, wherein the plurality of repetitions are associated with different spatial relations;
the plurality of positioning reference signals in the positioning reference signal resource set are associated with different spatial relations; and
the positioning reference signal has a plurality of periods, wherein the plurality of periods are associated with different spatial relations.

8. The method according to claim 6, wherein a spatial range of the first spatial relation is larger than a spatial range of the second spatial relation.

9. The method according to claim 1, wherein the first information is used for at least one of the following: configuring one or more spatial relations for an on-demand positioning reference signal; and activating one or more spatial relations for an on-demand positioning reference signal.

10. The method according to claim 9, wherein the first information is used for configuring at least one of the following for the on-demand positioning reference signal:
a spatial relation list, wherein the spatial relation list comprises one or more spatial relations;
one or more spatial relations;
one or more pieces of expected angle of departure AoD direction information and/or width information; and
one or more pieces of expected angle of arrival AoA direction information and/or width information.

11. The method according to claim 9, wherein the first information is used for configuring at least one of the following for the on-demand positioning reference signal:
the on-demand positioning reference signal is associated with one or more positioning reference signals;
one or more on-demand positioning reference signals are associated with one positioning reference signal or associated with one on-demand positioning reference signal; and
the on-demand positioning reference signal has an integer relation with an associated positioning reference signal.

12. The method according to claim 9, wherein the first information is used for configuring at least one of the following for the on-demand positioning reference signal:
a plurality of on-demand positioning reference signals have a same spatial relation;
a plurality of on-demand positioning reference signals have a same first spatial relation but different second spatial relations;
a plurality of on-demand positioning reference signals are associated with a first reference signal, wherein a spatial range of the first reference signal is larger than a spatial range of the plurality of on-demand positioning reference signals;
a plurality of on-demand positioning reference signals are associated with a positioning reference signal, wherein a spatial range of the positioning reference signal is larger than a spatial range of the plurality of on-demand positioning reference signals; and
a plurality of on-demand positioning reference signals are associated with a first reference signal and N second reference signals, wherein a spatial range of the first reference signal is larger than or equal to a spatial range of the N second reference signals.

13. The method according to claim 1, wherein in a case that the first information is used for activating one or more spatial relations for a positioning reference signal, the receiving first information comprises one of the following:
receiving media access control control element MAC CE signaling, wherein the MAC CE signaling is used to activate one or more spatial relations for the positioning reference signal;
receiving downlink control information DCI, wherein the DCI comprises indication information of one or more spatial relations of the positioning reference signal; and
receiving positioning protocol signaling, wherein the positioning protocol signaling comprises an activation command, and the activation command is used to activate one or more spatial relations for the positioning reference signal.

14. The method according to claim 13, wherein the first information further comprises at least one of the following: a physical cell identifier PCI, identification information of a non-serving cell, and frequency information, wherein
at least one of the following of the non-serving cell can be configured as one or more spatial relations of the positioning reference signal: synchronization signal and PBCH block SSB, a positioning reference signal, a sounding reference signal, and a channel state information reference signal CSI-RS.

15. The method according to claim 13, wherein the activation command is used for at least one of the following:
carrying identification information of the positioning reference signal;
carrying identification information of one or more spatial relations;
carrying identification information of a spatial relation list;
activating a spatial relation corresponding to a first subset of the positioning reference signal or a beam in a first direction;
expected angle of departure AoD direction information and/or width information; and
expected angle of arrival AoA direction information and/or width information.

16. The method according to claim 15, wherein
the activation command comprises indication information, and the indication information indicates that the positioning reference signal is to be sent or received based on specific or predefined precoding information; or
the positioning protocol signaling comprises precoding information, and the positioning reference signal corresponds to one or more pieces of the precoding information; or
the activation command comprises indication information, and the indication information indicates that the positioning reference signal is to be sent or received based on a specific or predefined antenna port and/or precoding information; or
the activation command comprises indication information, and the indication information indicates that the positioning reference signal is to be sent or received based on specific or predefined spatial relation information.

17. The method according to claim 1, wherein the method further comprises: sending, by the terminal, a request message, wherein the request message is used to request to configure at least one of the following:
priority information of spatial relations of the positioning reference signal;
one or more spatial relations of the positioning reference signal; and
an on-demand positioning reference signal.

18. The method according to claim 1, wherein the method further comprises: receiving or sending, by the terminal, the positioning reference signal by using one or more spatial relations.

19. The method according to claim 18, wherein the receiving or sending, by the terminal, the positioning reference signal by using one spatial relation comprises one of the following:
receiving or sending, by the terminal, the positioning reference signal in a plurality of periods, repetitions, or resources by using one spatial relation; and
receiving or sending, by the terminal, the positioning reference signal in a plurality of periods, repetitions, resources, frequency division multiplexing, or time division multiplexing sequentially by using one spatial relation.

20. The method according to claim 19, wherein the receiving or sending, by the terminal, the positioning reference signal in a plurality of periods, repetitions, resources, frequency division multiplexing, or time division multiplexing sequentially by using one spatial relation comprises one of the following:
receiving or sending, by the terminal, the positioning reference signal in the plurality of periods, repetitions, or resources by using different spatial relations; and
receiving or sending, by the terminal, the positioning reference signal on a plurality of time domain resources or frequency domain resources by using different spatial relations.

21. The method according to claim 18, wherein the receiving or sending, by the terminal, the positioning reference signal by using a plurality of spatial relations comprises one of the following:
receiving or sending, by the terminal, the positioning reference signal in a plurality of periods, repetitions, or resources sequentially by using different spatial relations in a spatial relation list;
receiving or sending, by the terminal, the positioning reference signal in a plurality of periods, repetitions, or resources sequentially by using different spatial relations in the plurality of spatial relations;
receiving or sending, by the terminal, the positioning reference signal in a plurality of periods, repetitions, or resources sequentially by using activated different spatial relations in a spatial relation list; and
receiving or sending, by the terminal, the positioning reference signal in a plurality of periods, repetitions, or resources sequentially by using activated different spatial relations in the plurality of spatial relations.

22. The method according to any one of claims 19 to 21, wherein the spatial relation comprises at least one of the following: a PMI, precoding information, an antenna port and/or panel information, spatial relation reference signal information, a transmission configuration indicator TCI state, quasi-co-location QCL information, and a path loss reference signal.

23. The method according to claim 1, wherein in a case that a plurality of spatial relations are configured for the terminal, the method further comprises: receiving or sending, by the terminal, the positioning reference signal by using one of the following:
a spatial relation used for receiving a control resource set;
a default spatial relation;
a preconfigured spatial relation;
a first spatial relation;
a spatial relation used for initial access;
an activated spatial relation; and
a spatial relation indicated by a first rule, wherein the first rule is used to indicate a rule for using the plurality of spatial relations.

24. The method according to claim 1, wherein in a case that one spatial relation and one spatial relation set are configured for the terminal, the method further comprises: receiving or sending, by the terminal, the positioning reference signal by using one of the following:
a spatial relation used for receiving a control resource set;
a configured spatial relation;
a spatial relation used for initial access;
an activated spatial relation; and
a spatial relation indicated by a second rule, wherein the second rule is used to indicate a rule for using a plurality of spatial relations.

25. The method according to claim 1, wherein capability information supported by the terminal comprises at least one of the following:
support for configuring a plurality of spatial relations;
support for configuring a plurality of spatial relations within one time unit;
support for sending or receiving the positioning reference signal based on a PMI; and
support for sending or receiving the positioning reference signal according to a rule of antenna or codebook mapping.

26. The method according to claim 1, wherein in a case that a spatial relation of a downlink positioning reference signal is updated, the method further comprises: performing, by the terminal, at least one of the following actions on an uplink signal that uses the downlink positioning reference signal as a spatial relation:
updating, based on the updated spatial relation of the downlink positioning reference signal, spatial information corresponding to the uplink signal;
sending first signaling to a location management function LMF, wherein the first signaling comprises the spatial relation of the downlink positioning reference signal and/or the spatial relation of the uplink signal; and
sending the uplink signal based on the spatial relation of the downlink positioning reference signal when the uplink signal is configured.

27. The method according to claim 1, wherein in a case that a downlink positioning reference signal is used as a spatial relation of an uplink signal,
the terminal does not update a spatial relation of the downlink positioning reference signal in a sending period of the uplink signal; and/or
the terminal completes configuration or activation of a spatial relation of the downlink positioning reference signal before M time domain units in which the uplink signal is sent, wherein M is a positive integer.

28. A spatial relation indication method, comprising: sending, by a network-side device, first information, wherein the first information is used for at least one of the following: configuring one or more spatial relations for a positioning reference signal; and activating one or more spatial relations for a positioning reference signal.

29. The method according to claim 28, wherein in a case that the first information is used for configuring one or more spatial relations for a positioning reference signal, the first information comprises at least one of the following:
a spatial relation list, wherein the spatial relation list comprises one or more spatial relations or one or more reference signals; and
one or more spatial relations.

30. The method according to claim 28, wherein in a case that the first information is used for configuring one or more spatial relations for a positioning reference signal, the first information is further used for indicating at least one of the following:
a plurality of positioning reference signals have a same spatial relation;
a plurality of positioning reference signals have a same first spatial relation but different second spatial relations;
a plurality of positioning reference signals are associated with a first reference signal, wherein a spatial range of the first reference signal is larger than a spatial range of the plurality of positioning reference signals;
a positioning reference signal is associated with a first reference signal and a second reference signal, wherein a spatial range of the first reference signal is larger than a spatial range of the second reference signal; and
a positioning reference signal is associated with a first reference signal and N second reference signals, wherein a spatial range of the first reference signal is larger than or equal to a spatial range of the N second reference signals.

31. The method according to claim 28, wherein in a case that the first information is used for configuring a plurality of spatial relations for a positioning reference signal, the first information is further used for indicating at least one of the following:
a plurality of positioning reference signals in a positioning reference signal resource set have a same spatial relation;
a plurality of positioning reference signals in a positioning reference signal resource set have a same first spatial relation but different second spatial relations;
a plurality of positioning reference signals in a positioning reference signal resource set are associated with a first reference signal, and a spatial range of the first reference signal is larger than a spatial range of the plurality of positioning reference signals;
a second positioning reference signal in a second positioning reference signal resource set has an integer relation with a first positioning reference signal in a first positioning reference signal resource set;
a second positioning reference signal in a second positioning reference signal resource set has an integer relation with a first positioning reference signal in a first positioning reference signal resource subset; and
in a case that second positioning reference signals in a second positioning reference signal resource set have a same first spatial relation with first positioning reference signals in a first positioning reference signal resource set, a quantity of the second positioning reference signals has an integer relation with a quantity of the first positioning reference signals.

32. The method according to claim 31, wherein the first information is used for indicating at least one of the following:
one positioning reference signal has a plurality of repetitions, wherein the plurality of repetitions are mapped to different antenna ports and/or precoding information;
the plurality of positioning reference signals in the positioning reference signal resource set are mapped to different antenna ports and/or precoding information;
the positioning reference signal has a plurality of periods, wherein the plurality of periods are mapped to different antenna ports and/or precoding information;
one positioning reference signal has a plurality of repetitions, wherein the plurality of repetitions are associated with different spatial relations;
the plurality of positioning reference signals in the positioning reference signal resource set are associated with different spatial relations; and
the positioning reference signal has a plurality of periods, wherein the plurality of periods are associated with different spatial relations.

33. The method according to claim 28, wherein the first information is used for at least one of the following: configuring one or more spatial relations for an on-demand positioning reference signal; and activating one or more spatial relations for an on-demand positioning reference signal.

34. The method according to claim 33, wherein the first information is used for configuring at least one of the following for the on-demand positioning reference signal:
a spatial relation list, wherein the spatial relation list comprises one or more spatial relations;
one or more spatial relations;
one or more pieces of expected angle of departure AoD direction information and/or width information; and
one or more pieces of expected angle of arrival AoA direction information and/or width information.

35. The method according to claim 33, wherein the first information is used for configuring at least one of the following for the on-demand positioning reference signal:
the on-demand positioning reference signal is associated with one or more positioning reference signals;
one or more on-demand positioning reference signals are associated with one positioning reference signal or associated with one on-demand positioning reference signal; and
the on-demand positioning reference signal has an integer relation with an associated positioning reference signal.

36. The method according to claim 33, wherein the first information is used for configuring at least one of the following for the on-demand positioning reference signal:
a plurality of on-demand positioning reference signals have a same spatial relation;
a plurality of on-demand positioning reference signals have a same first spatial relation but different second spatial relations;
a plurality of on-demand positioning reference signals are associated with a first reference signal, wherein a spatial range of the first reference signal is larger than a spatial range of the plurality of on-demand positioning reference signals;
a plurality of on-demand positioning reference signals are associated with a positioning reference signal, wherein a spatial range of the positioning reference signal is larger than a spatial range of the plurality of on-demand positioning reference signals; and
a plurality of on-demand positioning reference signals are associated with a first reference signal and N second reference signals, wherein a spatial range of the first reference signal is larger than or equal to a spatial range of the N second reference signals, and N is a positive integer.

37. The method according to claim 28, wherein in a case that the first information is used for activating one or more spatial relations for a positioning reference signal, the sending first information comprises one of the following:
sending MAC CE signaling, wherein the MAC CE signaling is used to activate one or more spatial relations for the positioning reference signal;
sending DCI, wherein the DCI comprises indication information of one or more spatial relations of the positioning reference signal; and
sending positioning protocol signaling, wherein the positioning protocol signaling comprises an activation command, and the activation command is used to activate one or more spatial relations for the positioning reference signal.

38. The method according to claim 28, wherein the method further comprises: receiving or sending, by the network-side device, the positioning reference signal by using one or more spatial relations.

39. The method according to claim 38, wherein the receiving or sending, by the network-side device, the positioning reference signal by using one spatial relation comprises one of the following:
receiving or sending, by the network-side device, the positioning reference signal in a plurality of periods, repetitions, or resources by using one spatial relation; and
receiving or sending, by the network-side device, the positioning reference signal in a plurality of periods, repetitions, resources, frequency division multiplexing, or time division multiplexing sequentially by using one spatial relation.

40. The method according to claim 28, wherein in a case that a spatial relation of a downlink positioning reference signal is updated, the method further comprises: performing, by the network-side device, at least one of the following actions on an uplink signal that uses the downlink positioning reference signal as a spatial relation:
updating, based on the updated spatial relation of the downlink positioning reference signal, spatial information corresponding to the uplink signal;
sending first signaling to a location management function LMF, wherein the first signaling comprises the spatial relation of the downlink positioning reference signal and/or the spatial relation of the uplink signal; and
receiving the uplink signal based on the spatial relation of the downlink positioning reference signal when the uplink signal is configured.

41. The method according to claim 28, wherein in a case that a downlink positioning reference signal is used as a spatial relation of an uplink signal,
the network-side device does not update a spatial relation of the downlink positioning reference signal in a sending period of the uplink signal; and/or
the network-side device completes configuration or activation of a spatial relation of the downlink positioning reference signal before M time domain units in which the uplink signal is sent, wherein M is a positive integer.

42. A spatial relation indication apparatus, comprising: a first communications module, configured to receive first information, wherein the first information is used for at least one of the following: configuring one or more spatial relations for a positioning reference signal; and activating one or more spatial relations for a positioning reference signal.

43. The apparatus according to claim 42, wherein in a case that the first information is used for configuring one or more spatial relations for a positioning reference signal, the first information comprises at least one of the following:
a spatial relation list, wherein the spatial relation list comprises one or more spatial relations or one or more reference signals; and
one or more spatial relations.

44. The apparatus according to claim 43, wherein a mapping relationship between the positioning reference signal and the spatial relation list comprises one of the following:
one positioning reference signal corresponds to one spatial relation list;
one positioning reference signal corresponds to a plurality of spatial relation lists;
a plurality of positioning reference signals correspond to one spatial relation list; and
a plurality of positioning reference signals correspond to a plurality of spatial relation lists.

45. The apparatus according to claim 43, wherein the first information comprises at least one of the following:
a precoding matrix indicator PMI list, wherein the PMI list comprises one or more PMIs;
a precoding information list, wherein the precoding information list comprises one or more pieces of precoding information;
one or more PMIs;
one or more pieces of precoding information; and
a plurality of first mapping relationships, wherein the first mapping relationships comprise mapping relationships between positioning reference signals and antenna ports.

46. The apparatus according to claim 42, wherein in a case that the first information is used for configuring one or more spatial relations for a positioning reference signal, the first information is further used for indicating at least one of the following:
a plurality of positioning reference signals have a same spatial relation;
a plurality of positioning reference signals have a same first spatial relation but different second spatial relations;
a plurality of positioning reference signals are associated with a first reference signal, wherein a spatial range of the first reference signal is larger than a spatial range of the plurality of positioning reference signals;
a positioning reference signal is associated with a first reference signal and a second reference signal, wherein a spatial range of the first reference signal is larger than a spatial range of the second reference signal; and
a positioning reference signal is associated with a first reference signal and N second reference signals, wherein a spatial range of the first reference signal is larger than or equal to a spatial range of the N second reference signals, and N is a positive integer.

47. The apparatus according to claim 42, wherein in a case that the first information is used for configuring a plurality of spatial relations for a positioning reference signal, the first information is further used for indicating at least one of the following:
a plurality of positioning reference signals in a positioning reference signal resource set have a same spatial relation;
a plurality of positioning reference signals in a positioning reference signal resource set have a same first spatial relation but different second spatial relations;
a plurality of positioning reference signals in a positioning reference signal resource set are associated with a first reference signal, and a spatial range of the first reference signal is larger than a spatial range of the plurality of positioning reference signals;
a second positioning reference signal in a second positioning reference signal resource set has an integer relation with a first positioning reference signal in a first positioning reference signal resource set;
a second positioning reference signal in a second positioning reference signal resource set has an integer relation with a first positioning reference signal in a first positioning reference signal resource subset; and
in a case that second positioning reference signals in a second positioning reference signal resource set have a same first spatial relation with first positioning reference signals in a first positioning reference signal resource set, a quantity of the second positioning reference signals has an integer relation with a quantity of the first positioning reference signals.

48. The apparatus according to claim 47, wherein the first information is used for indicating at least one of the following:
one positioning reference signal has a plurality of repetitions, wherein the plurality of repetitions are mapped to different antenna ports and/or precoding information;
the plurality of positioning reference signals in the positioning reference signal resource set are mapped to different antenna ports and/or precoding information;
the positioning reference signal has a plurality of periods, wherein the plurality of periods are mapped to different antenna ports and/or precoding information;
one positioning reference signal has a plurality of repetitions, wherein the plurality of repetitions are associated with different spatial relations;
the plurality of positioning reference signals in the positioning reference signal resource set are associated with different spatial relations; and
the positioning reference signal has a plurality of periods, wherein the plurality of periods are associated with different spatial relations.

49. The apparatus according to claim 47, wherein a spatial range of the first spatial relation is larger than a spatial range of the second spatial relation.

50. The apparatus according to claim 42, wherein the first information is used for at least one of the following: configuring one or more spatial relations for an on-demand positioning reference signal; and activating one or more spatial relations for an on-demand positioning reference signal.

51. The apparatus according to claim 50, wherein the first information is used for configuring at least one of the following for the on-demand positioning reference signal:
a spatial relation list, wherein the spatial relation list comprises one or more spatial relations;
one or more spatial relations;
one or more pieces of expected angle of departure AoD direction information and/or width information; and
one or more pieces of expected angle of arrival AoA direction information and/or width information.

52. The apparatus according to claim 50, wherein the first information is used for configuring at least one of the following for the on-demand positioning reference signal:
the on-demand positioning reference signal is associated with one or more positioning reference signals;
one or more on-demand positioning reference signals are associated with one positioning reference signal or associated with one on-demand positioning reference signal; and
the on-demand positioning reference signal has an integer relation with an associated positioning reference signal.

53. The apparatus according to claim 50, wherein the first information is used for configuring at least one of the following for the on-demand positioning reference signal:
a plurality of on-demand positioning reference signals have a same spatial relation;
a plurality of on-demand positioning reference signals have a same first spatial relation but different second spatial relations;
a plurality of on-demand positioning reference signals are associated with a first reference signal, wherein a spatial range of the first reference signal is larger than a spatial range of the plurality of on-demand positioning reference signals;
a plurality of on-demand positioning reference signals are associated with a positioning reference signal, wherein a spatial range of the positioning reference signal is larger than a spatial range of the plurality of on-demand positioning reference signals; and
a plurality of on-demand positioning reference signals are associated with a first reference signal and N second reference signals, wherein a spatial range of the first reference signal is larger than or equal to a spatial range of the N second reference signals.

54. The apparatus according to claim 42, wherein in a case that the first information is used for activating one or more spatial relations for a positioning reference signal, the first communications module is configured to perform one of the following:
receiving media access control control element MAC CE signaling, wherein the MAC CE signaling is used to activate one or more spatial relations for the positioning reference signal;
receiving downlink control information DCI, wherein the DCI comprises indication information of one or more spatial relations of the positioning reference signal; and
receiving positioning protocol signaling, wherein the positioning protocol signaling comprises an activation command, and the activation command is used to activate one or more spatial relations for the positioning reference signal.

55. The apparatus according to claim 54, wherein the first information further comprises at least one of the following: a physical cell identifier PCI, identification information of a non-serving cell, and frequency information, wherein
at least one of the following of the non-serving cell can be configured as one or more spatial relations of the positioning reference signal: a synchronization signal and PBCH block or synchronization signal block SSB, a positioning reference signal, a sounding reference signal, and a channel state information reference signal CSI-RS.

56. The apparatus according to claim 54, wherein the activation command is used for at least one of the following:
carrying identification information of the positioning reference signal;
carrying identification information of one or more spatial relations;
carrying identification information of a spatial relation list;
activating a spatial relation corresponding to a first subset of the positioning reference signal or a beam in a first direction;
expected angle of departure AoD direction information and/or width information; and
expected angle of arrival AoA direction information and/or width information.

57. The apparatus according to claim 56, wherein the activation command comprises indication information, and the indication information indicates that the positioning reference signal is to be sent or received based on specific or predefined precoding information; or
the positioning protocol signaling comprises precoding information, and the positioning reference signal corresponds to one or more pieces of the precoding information; or
the activation command comprises indication information, and the indication information indicates that the positioning reference signal is to be sent or received based on a specific or predefined antenna port and/or precoding information; or
the activation command comprises indication information, and the indication information indicates that the positioning reference signal is to be sent or received based on specific or predefined spatial relation information.

58. The apparatus according to claim 42, wherein the first communications module is further configured to:
send a request message, wherein the request message is used to request to configure at least one of the following:
priority information of spatial relations of the positioning reference signal;
one or more spatial relations of the positioning reference signal; and
an on-demand positioning reference signal.

59. The apparatus according to claim 42, wherein the first communications module is further configured to:
receive or send the positioning reference signal by using one or more spatial relations.

60. The apparatus according to claim 59, wherein the first communications module is further configured to perform one of the following:
receiving or sending the positioning reference signal in a plurality of periods, repetitions, or resources by using one spatial relation; and
receiving or sending the positioning reference signal in a plurality of periods, repetitions, resources, frequency division multiplexing, or time division multiplexing sequentially by using one spatial relation.

61. The apparatus according to claim 60, wherein the first communications module is further configured to perform one of the following:
receiving or sending the positioning reference signal in the plurality of periods, repetitions, or resources by using different spatial relations; and
receiving or sending the positioning reference signal on a plurality of time domain resources or frequency domain resources by using different spatial relations.

62. The apparatus according to claim 59, wherein the first communications module is further configured to perform one of the following:
receiving or sending the positioning reference signal in a plurality of periods, repetitions, or resources sequentially by using different spatial relations in a spatial relation list;
receiving or sending the positioning reference signal in a plurality of periods, repetitions, or resources sequentially by using different spatial relations in the plurality of spatial relations;
receiving or sending the positioning reference signal in a plurality of periods, repetitions, or resources sequentially by using activated different spatial relations in a spatial relation list; and
receiving or sending the positioning reference signal in a plurality of periods, repetitions, or resources sequentially by using activated different spatial relations in the plurality of spatial relations.

63. The apparatus according to claims 50 to 62, wherein the spatial relation comprises at least one of the following: a PMI, precoding information, an antenna port and/or panel information, spatial relation reference signal information, a transmission configuration indicator TCI state, quasi-co-location QCL information, and a path loss reference signal.

64. The apparatus according to claim 42, wherein in a case that a plurality of spatial relations are configured for the terminal, the first communications module is further configured to receive or send the positioning reference signal by using one of the following:
a spatial relation used for receiving a control resource set;
a default spatial relation;
a preconfigured spatial relation;
a first spatial relation;
a spatial relation used for initial access;
an activated spatial relation; and
a spatial relation indicated by a first rule, wherein the first rule is used to indicate a rule for using the plurality of spatial relations.

65. The apparatus according to claim 42, wherein in a case that one spatial relation and one spatial relation set are configured for the apparatus, the first communications module is further configured to receive or send the positioning reference signal by using one of the following:
a spatial relation used for receiving a control resource set;
a configured spatial relation;
a spatial relation used for initial access;
an activated spatial relation; and
a spatial relation indicated by a second rule, wherein the second rule is used to indicate a rule for using a plurality of spatial relations.

66. The apparatus according to claim 42, wherein capability information supported by the terminal comprises at least one of the following:
support for configuring a plurality of spatial relations;
support for configuring a plurality of spatial relations within one time unit;
support for sending or receiving the positioning reference signal based on a PMI; and
support for sending or receiving the positioning reference signal according to a rule of antenna or codebook mapping.

67. The apparatus according to claim 42, wherein in a case that a spatial relation of a downlink positioning reference signal is updated, the apparatus is further configured to perform at least one of the following actions on an uplink signal that uses the downlink positioning reference signal as a spatial relation:
updating, based on the updated spatial relation of the downlink positioning reference signal, spatial information corresponding to the uplink signal;
sending first signaling to a location management function LMF, wherein the first signaling comprises the spatial relation of the downlink positioning reference signal and/or the spatial relation of the uplink signal; and
sending the uplink signal based on the spatial relation of the downlink positioning reference signal when the uplink signal is configured.

68. The apparatus according to claim 42, wherein in a case that a downlink positioning reference signal is used as a spatial relation of an uplink signal,
the apparatus does not update a spatial relation of the downlink positioning reference signal in a sending period of the uplink signal; and/or
the apparatus completes configuration or activation of a spatial relation of the downlink positioning reference signal before M time domain units in which the uplink signal is sent, wherein M is a positive integer.

69. A spatial relation indication apparatus, comprising: a second communications module, configured to send first information, wherein the first information is used for at least one of the following: configuring one or more spatial relations for a positioning reference signal; and activating one or more spatial relations for a positioning reference signal.

70. A terminal, comprising a processor, a memory, and a program or instructions stored in the memory and capable of running on the processor, wherein when the program or instructions are executed by the processor, the spatial relation indication method according to any one of claims 1 to 27 is implemented.

71. A network-side device, comprising a processor, a memory, and a program or instructions stored in the memory and capable of running on the processor, wherein when the program or instructions are executed by the processor, the spatial relation indication method according to any one of claims 28 to 41 is implemented.

72. A readable storage medium, wherein the readable storage medium stores a program or instructions, and when the program or instructions are executed by a processor, the spatial relation indication method according to any one of claims 1 to 27 is implemented, or the spatial relation indication method according to any one of claims 28 to 41 is implemented.

73. A computer program product, wherein when the program product is executed by at least one processor, the spatial relation indication method according to any one of claims 1 to 27 is implemented, or the spatial relation indication method according to any one of claims 28 to 41 is implemented.

74. A chip, wherein the chip comprises a processor and a communications interface, the communications interface is coupled to the processor, and the processor is configured to run a program or instructions to implement the spatial relation indication method according to any one of claims 1 to 27 or implement the spatial relation indication method according to any one of claims 28 to 41.
